# EUROPEAN PATENT SPECIFICATION

(11) **EP 3 379 982 B1**
(45) Date of publication and mention of the grant of the patent: **19.04.2023**
(21) Application number: 16798526.6
(22) Date of filing: 22.11.2016
(51) Int. Cl.: A47J 31/36, A47J 31/52

(54) **BEVERAGE OR FOODSTUFF CONTAINER CONSUMPTION MONITORING METHOD**
VERFAHREN ZUR ÜBERWACHUNG DES VERBRAUCHS VON GETRÄNKE- ODER LEBENSMITTELBEHÄLTERN
PROCÉDÉ DE SURVEILLANCE DE LA CONSOMMATION DES CONTENEURS DE BOISSON OU D'ALIMENT

(30) Priority: 27.11.2015 EP 15196792
(43) Date of publication of application: 03.10.2018
(73) Proprietor: Société des Produits Nestlé S.A., 1800 Vevey (CH)
(72) Inventor: MAGATTI, Marco, 1010 Lausanne (CH)
(74) Representative: Schnyder, Frank Simon
(86) International application number: PCT/EP2016/078409
(87) International publication number: WO 2017/089337

(56) References cited:
- WO-A1-2011/067227
- WO-A1-2014/037474

## Description

### TECHNICAL FIELD

The described embodiments relate generally to beverage or foodstuff preparation systems which prepare a beverage or foodstuff from containers such as coffee capsule, to electronic devices networked to said machines, and more specifically to techniques for monitoring over a network the consumption of said containers.

### BACKGROUND

Increasingly machines for the preparation of a beverage or foodstuff are configured to operate using a container that comprises a single-serving of a beverage or foodstuff material, e.g. coffee, tea, ice cream, yoghurt. The machine may be configured for preparation by processing said material in the container, e.g. with the addition of fluid, such as milk or water, and the application of mixing thereto, such a machine is disclosed in PCT/EP13/072692. Alternatively, the machine may be configured for preparation by at least partially extracting an ingredient of the material from the container, e.g. by dissolution or brewing, and expelling it into a receptacle for end user consumption. Examples of the latter such machines are provided in EP 2393404 A1, EP 2470053 A1, WO 2009/113035.

The increased popularity of these machines may be partly attributed to enhanced user convenience compared to a conventional machine, e.g. compared to a manually operated coffee maker such as a stove-top espresso maker or cafetiére (French press).

In particular the aforesaid machines comprise: a container processing subsystem, which is operable to process the said material via the application of a fluid (typically water) to the desired beverage or foodstuff; and a control system to control the container processing subsystem to execute a preparation process.

One or more containers may be used in a single preparation process, e.g. a container containing a milk product to be prepared in conjunction with a separate container containing a coffee product. Moreover a several preparation process may use the same container, e.g. two preparation processes are executed on one container to achieve a greater volume of product. A home user may use the machine numerous times a day. A machine in a commercial establishment may be used significantly more frequently. There is therefore a desire to prevent a shortage of containers at the location of the machine which would render the machine inoperable.

One solution proposed in EP10771681 comprises a beverage preparation machine operable to count capsule consumption and to transmit, over a network, consumption information related thereto to a server. The server is operable to determine a shortage of capsules and either: to provide a message to notify of the shortage and thus prompt the making of an order; or to prepare a shipment for such an order. The message may be transmit to an electronic communication device of a user, such as a smart phone. A drawback of such a system is that the beverage machine requires a network connection, such as a LAN, the electrical componentry for which are expensive. Moreover for reasons of network security or computational resource it may not be desirable to operate the machine as a node of a LAN network. Moreover for reasons of data privacy an end user may not wish to communicate directly their capsule consumption with the server. A further drawback is that there is very little flexibility and convenience for the end user of such a system, e.g. in accounting for: damaged capsules; lost orders; use of capsules on difference machines; use of capsules not supplied from the server; ordering capsules not for use on the system.

WO 2011/067277 discloses a beverage preparation machine having an extended user-advisory functionality, comprising a control unit for recognizing an actual or upcoming event triggering said user-advisory functionality, a communication module for communicating with a remote external device via a communication network for displaying messages, wherein the control unit is further adapted to establish a connection via the communication module to an external device.

WO 2014/037474 discloses a capsule storage device having a capsule sensing arrangement to detect the presence of a capsule in a detection area and to obtain information about the capsule. The accessory may count the number of capsules in the detection area and send this information to an external module, which in turn may prepare or send a re-order when the stock of capsules has reached a given threshold. This device is however an additional accessory that requires yet another additional external module to prepare a re-order. Furthermore, this storage device is not able to precisely determine the number and types of capsule actually used by the beverage preparation machine.

Thus in spite of the considerable effort already invested in the development of said systems further improvements are desirable.

### SUMMARY

An object of the present disclosure is to provide a beverage or foodstuff preparation system which can monitor container consumption for the purpose of reordering, which is flexible and convenient to operate for the end user. It would be advantageous to provide such a system that maximises user privacy. It would be advantageous to provide such a system that minimises usage of computational resources of a user's home network. It would be advantageous to provide such a system that is cost effective. It would be advantageous to provide such a system that is reliable. It would be advantageous to provide such a system that can be conveniently implemented in a home environment. The above objects and/or advantages are generally achieved by the embodiments and claims discussed in the following.

Disclosed herein according to a first embodiment is a beverage or foodstuff preparation machine comprising a container processing subsystem to process a beverage or foodstuff container to prepare a beverage or foodstuff therefrom: a control subsystem to control the container processing subsystem to prepare the beverage or foodstuff; a consumption monitoring subsystem operable to monitor consumption of containers by said container processing subsystem and to determine therefrom (and preferably store) container consumption information which comprises a quantitative amount relating to said consumption (e.g. each time a container used the consumption information is updated) and; a networking subsystem comprising a network interface for communication with an external electronic device over a network. The consumption monitoring subsystem operable to transmit (e.g. automatically such as when a network connection is obtained to said electronic device or upon received a request from said device or when a change in the quantitative amount occurs) said consumption information and/or information derived therefrom (e.g. the later described stock state information) over a network using the networking subsystem. The consumption information may comprise a running count of containers consumed by the container processing subsystem or individual consumptions of containers.

In the example where the consumption information is transmitted (e.g. for when the later described stock state information is determined on the electronic device), the consumption information may be transmitted each time it is changed or sent in blocks of a predetermined change in numerical value, e.g. 2 - 5. Moreover in the event of the networking subsystem not being connected to the electronic device, the consumption information is preferably buffered and transmitted once a connection is established.

In the alternate example (wherein the aforesaid) stock state information is transmitted, the consumption monitoring subsystem may be configured to: store stock state information, which comprise information relating to a quantitative amount of containers at a location of the machine (e.g. a numerical value); to update (preferably automatically) said stock state information using the consumption information. As an example the updated stock state information is derived from subtracting the amount designated in the consumption information from the amount designated in the stock state information, e.g.: the amount designated in the stock state information is 10 and the amount designated in the consumption information is 5, hence 5 is subtracted from 10, the amount designated in the updated stock state information becomes 5 and the amount designated in the in the consumption information is set to 0; alternatively when a container is consumed the amount designated in the consumption information is set from 0 to 1, the amount designated in the stock state information is updated via decrement by 1 and the amount designated in the in the consumption information is set to back to 0.

The consumption monitoring subsystem may be configured to: receive, via the networking subsystem, the stock order information, which comprises information relating to a quantitative amount of containers purchased by a user (e.g. a numerical value) and to update (preferably automatically) the stock state information using said stock order information. As an example the updated stock state information is derived from summing the amount designated in the stock order information with the amount designated in the stock state information, e.g.: the amount designated in the stock state information is 10 and the amount designated in the stock order information is 5, hence 5 is summed with 10 and the amount designated in the updated stock state information becomes 15.

Hence the stock state information may be continuously updated using the consumption information and/or the stock order information as either of these change.

The consumption monitoring subsystem may be configured to: via the networking subsystem, the aforesaid updated stock state information to the electronic device.

An advantage of the latter example is that a user's consumption information can remain at the client end of the network, e.g. on the machine and/or the electronic device: is not send to a remote ordering resource over an external public network. In this way user's consumption information, e.g. quantity and time of consumption, remain private. In particular only requests for orders are submitted over an external public network to said resource.

Moreover by effecting the above updating of the stock state information at the machine a user can more conveniently manage multiple machines, e.g. by assigning orders to particular machines. Moreover since the machine only interfaces with the electronic device, using the resources (e.g. the machine acting as a node itself) of a user's home local area network can be avoided.

The stock state information may be transmitted to the electronic device each time it is updated or sent in blocks of a predetermined change in numerical value, e.g. 2-5. Moreover in the event of the networking subsystem not being connected to the electronic device, the stock state information is preferably buffered and transmitted once a connection is established.

The consumption monitoring subsystem may be configured to: receive from the electronic device, via the networking subsystem, stock state correction information, which comprise information relating to a manual correction to the stock state information, (e.g. a quantitative amount, a numerical value) and to update said stock state information using the stock state correction information (e.g. by incrementing/decrementing it by a said amount). An advantage is that the system is flexible such that it can account for irregularities, such as lost or damaged containers or orders comprising the incorrect number of containers.

The consumption monitoring subsystem may be configured to: receive from the electronic device, via the networking subsystem, a first stock order identifier which is associated with a particular stock order information (e.g. stock order information which has or has not been received by the machine) and is to identify said stock order information; and to store the first stock order identifier as a second stock order identifier or a further second stock order identifier (e.g. a second stock order identifier already stored on the machine is either replaced or has the first stock order stored in addition thereto as a further second stock order identifier, preferably as an array of second stock order identifiers). An advantage is that the machine can communicate the stock order identifier to the electronic device to determine if stock order information is new or old (i.e. the stock order information has already been updated using the stock order information to prevent erroneous repeat update). The consumption monitoring subsystem may be configured to transmit, via the networking subsystem, the or each stored stock order identifier to the electronic device in particular in response to a request from said device or upon achieving a network connection to said device.

The first and second stock order identifier may be any suitable identifier, e.g. a numeric or alpha numeric identifier. It may also be encrypted by a known encryption algorithm, e.g. RSA, AES or otherwise.

The consumption monitoring subsystem may be configured to store a plurality of second stock order identifiers, e.g. 2 - 20 or 2 - 10. In this way previous orders can be prevented from being re-processed. Preferably they are stored as a stack memory such that a recent identifier replaces an older identifier. In this way the periodic purging of the memory can be avoided.

Optionally, updating of the stock order identifier may comprise comparing the received first stock order identifier to the stored second stock order identifier and: if different effecting said storing of the first stock order identifier as the second stock order identifier or a further second stock order identifier. In particular the end user may be given the option via a user interface of said machine to accept the update (in which case the first stock order identifier is stored as the second stock order identifier or a further second stock order identifier and the stock state information is updated using the stock order information associated with the first stock order identifier) or to decline said update (in which case the first stock order identifier is stored as the second stock order identifier or a further second stock order identifier and the stock state information is not updated). An advantage is that the same order not processed twice such that stock state information is erroneously updated.

The consumption monitoring subsystem may be operatively connected to the control subsystem, such that the consumption information is derived from executions of preparation processing by the control subsystem, e.g. executions for preparation processes are used to directly determine the consumption information.

In an alternative example the consumption monitoring subsystem may comprise a container detection sensor arranged to sense a container in the process of being consumed (e.g. during processing by the container processing subsystem, or when supplied to said unit, or when ejected from said unit), whereby the consumption monitoring subsystem is operable to update the consumption information using a signal from said sensor.

In particular the container detection sensor may be arranged at a container ejection channel to detect spent (i.e. used) containers ejected from the container processing subsystem. An advantage is that the consumption monitoring subsystem is operable to more reliably monitor consumption, for instance it can account for preparation a preparation process executed more than once on the same container. The container detection sensor may be selected from a group consisting of: an inductive sensor operable to detect a metallic portion of a container; an optical sensor (e.g. a photo electric sensor); other suitable proximity sensor, such as a sensor that may be configured for capacitive or magnetic sensing.

The control subsystem may comprise a processing subsystem with an associated memory unit. The aforesaid subsystems may each comprise an individual processor and memory, e.g. which are operatively connected to each other. Alternatively one or more subsystems share the resources of a main processor and/or memory. The aforesaid subsystems are generally operatively connected to each other.

The network interface of the networking subsystem is configured to communicate with an external electronic device over a network. The network interface is for bi-directional data transfer. The network interface comprises a wireless interface which is generally operable to transmit and receive wireless signals by a radio. It may be at least one selected from a group consisting of: a wireless local area network interface such as described in the Institute of Electronics Engineers (IEEE) 802.11 standard; Bluetooth^{™} from the Bluetooth Special Interest Group of Kirkland Wash; optional further wireless interfaces such as a near-field-communication network interface. Preferably the wireless interface is a Bluetooth or near field interface such that the machine is operable to communicate only in local proximity with an electronic device. An advantage is that the resources of a user's home network, e.g. a LAN connection, are not utilised.

The container processing subsystem is generally operable perform said preparation by the addition of fluid, such as water or milk, to beverage or foodstuff material of the container. Preferably the prepared beverage or foodstuff is a liquid beverage or foodstuff. The container processing subsystem may comprise one of an: an extraction unit; a dissolution unit; a mixing unit. The container processing subsystem may further comprise a fluid supply that is operable to supply fluid to the aforesaid unit. Generally the fluid supply comprises a fluid pump and a fluid heater.

The container processed by the container processing subsystem is for use (e.g. it is suitably dimensioned) by a beverage or foodstuff preparation machine. The container is for containing beverage or foodstuff material (e.g. it has an internal volume and may be food safe). The container may be a single-serving container, i.e. it is dimensioned for containing a dosage of beverage or foodstuff material for preparation of a single serving (e.g. pre portioned) of said product. The container may be a single-use container, i.e. it is intended to be used in a single preparation process after which it is preferably rendered unusable, e.g. by perforation, penetration, removal of a lid or exhaustion of said material. The container may comprise the beverage or foodstuff material contained therein. The container may comprise one of the following: capsule; packet; receptacle for end user consumption of the beverage or foodstuff therefrom. The capsule may have an internal volume of 5 - 80 ml. The receptacle may have an internal volume of 150 - 350 ml. The packet may have an internal volume of 150 - 350 ml or 200 - 300 ml or 50 - 150 depending on the application.

Disclosed herein according to a second embodiment is a computer program executable on an electronic device, said program configured to (e.g. comprising program instructions): obtain (e.g. over a network connection) from the beverage or foodstuff preparation machine: stock state information, which comprises information relating to a quantitative amount of the actual stock (e.g. a numerical value) of containers at a location of said machine; or obtain information for determining said amount (e.g. consumption information that may be used to determine said stock state information) and determine the stock state information therefrom; and effect the display of said stock state information on a display subsystem of the electronic device.

The computer program may as part of its execution be configured to automatically obtain a network connection between the electronic device and the networking subsystem of the beverage or foodstuff preparation machine. Said connection may comprise using a known protocol for data transfer, e.g. TCP or DHP.

An advantage is that a user can execute the computer program to conveniently determine a stock of containers at the machine location, i.e. to determine whether any containers require ordering. In particular the cost of a display on the machine can be obviated.

In one example the computer program may be configured to: obtain from a remote resource via the networking subsystem, stock order information, which comprise information detailing an amount of containers at a location of the machine; to update said stock state information using the consumption information; and/or obtain, via the networking subsystem of said machine, consumption information, which comprises information detailing an amount of containers consumed by a user and to update the stock state information using the consumption information. The update of the stock state information when performed by the computer program is the same process as discussed for the first embodiment when at the machine.

The computer program may as part of its execution be configured to automatically obtain a network connection between the electronic device and the remote resource. Said connection may comprise using a known protocol for data transfer, e.g. TCP or DHP.

In an alternate example the computer program may be configured to: obtain, over an external network from a remote resource, stock order information, which comprises an amount of containers purchased by a user; and to transmit said information to the beverage or foodstuff preparation machine. In this way the stock state information can be updated at said machine as discussed for the first embodiment. An advantage is that the associated electronic device can be paired with more than one machine, whereby each machine conveniently manages its own stock state information.

Typically the remote resource is a server system (e.g. embodied as hardware and/or software), a peer to peer network or other distributed system. The remote resource is arranged at a different location to the electronic device and said machine. Communication may for example be over the cellular network and/or the internet. The computer program may as part of its execution be configured to automatically obtain via the networking subsystem a connection between the electronic device and the remote resource. Said connection may comprise using a known protocol for data transfer, e.g. TCP or DHP.

The computer program may be configured to: obtain an input via an input/output subsystem of the electronic device for manual adjustment of the stock state information and derive from said input stock state correction information, which comprise a quantitative amount (e.g. a numerical amount) to adjust the stock state information by; effect the transmission of said stock state correction information to the beverage or foodstuff preparation machine for update of the stock state information stored thereon.

An advantage is that the user can conveniently account for irregularities effecting the amount of containers at a location of the machine, e.g. containers which are lost, broken or not purchased from the remote resource.

The computer program may be configured to: obtain from an input/output subsystem of the electronic device a user request to order an amount of containers; connect to a remote resource; effect ordering of said amount from the remote resource; obtain from said resource (or from the device itself as part of the order associated stock order information), the resulting stock state information (and first stock state identifier in the example of the third embodiment) may then be transmitted to the machine for update.

The computer program may be configured to: compare, using the stock state information (which is generally received from the machine), the amount of the actual stock of containers (at a location of said machine) to a predetermined value (e.g. any value between 2 - 100, such as 5, 10, 15); determine if the stock state is below said value; if below then effect the provision of a notification to a user via the input/output subsystem. The computer program may be configured to receive a user command to adjust said predetermined value.

The computer program may configure the notification to comprise: a change in colour of the displayed numerical amount relating to the stock state information, e.g. of said amount may change from a colour, such as from green or blue to red or orange, to indicate low stock; or a message comprising characters to notify of low stock.

Disclosed herein according to a third embodiment is a computer program executable on an electronic device, said program configured to (e.g. comprising program instructions): obtain, from the remote resource via the networking subsystem, a first stock order identifier, which is associated with stock stock order information; obtain, a second stock order identifier from the beverage or foodstuff preparation machine via the networking subsystem; determine if said identifiers are different. If different then to effect the transmission of the first stock order identifier and the associated stock order information (which is typically received from the remote resource with the first stock order identifier, although it may be received in response to a difference being determined) received from the remote resource to said machine. Alternatively if different it may store the first stock order identifier on the electronic device in association with the machine (e.g. using a machine identifier or in a particular address space) as the second stock order identifier or as one of a plurality of second stock order identifiers. Else if the identifiers are the same then the computer program may be configured not to transmit the stock order information or the first stock order identifier.

In this way the stock state information on the machine can be updated using the transmitted stock state information in the manner discussed for the first embodiment. In this way the second stock state identifier on the machine can be updated using the transmitted first stock state identifier e.g. via replacement or storage in addition to as discussed for the first embodiment.

An advantage is that the stock order identifiers can be used to control the transmission of stock order information to the machine, and thus control the updating of the stock state information using the stock order information on the machine to ensure that the same stock order information is not used for update twice or erroneous stock order information is not used for update.

In particular the computer program may be configured to, if in the event that the first and second stock orders are different, then prior to performing said transmission, effect the obtaining of a response from a user via an input/output subsystem of the electronic device to confirm whether the stock order is to be associated with the machine. If confirmed then to execute said transmission of the first stock order identifier and associated stock order information. If not confirmed then to transmit only the first stock order identifier, i.e. and not the associated stock order information such that it is not used for update of the stock state information.

An advantage is that the user can chose whether to associate the order with the or a particular machine. If they chose not to then the first stock order identifier is sent to the machine (but not the associated stock order information) to prevent re-processing of the order.

The computer program may as part of its execution be configured to automatically obtain a network connection between the electronic device and the remote resource. Said connection may comprise using a known protocol for data transfer, e.g. TCP or DHP. The computer program may be configured to: each time the electronic device connects to the remote resource, obtain of the last first stock order identifier and processing it in the above manner. An advantage is that the stock order information is automatically checked as being up to date.

The computer program may be configured to: obtain from an input/output subsystem of the electronic device a user request to order an amount of containers; connect to a remote resource; effect ordering of said amount from the remote resource; obtain from said resource (or from the device itself as part of the order associated stock order information) the resulting stock state information and first stock state identifier, which may then be transmitted to the machine for processing as discussed above.

It will be understood that the third and second embodiment are complimentary and may in particular be combined. Moreover, the functional units described by the computer programs herein generally herein may be implemented, in various manners, using digital electronic logic, for example, one or more ASICs or FPGAs; one or more units of firmware configured with stored code; one or more computer programs or other software elements such as modules or algorithms; or any combination thereof. One embodiment may comprise a special-purpose computer specially configured to perform the functions described herein and in which all of the functional units comprise digital electronic logic, one or more units of firmware configured with stored code, or one or more computer programs or other software elements stored in storage media.

Disclosed herein according to a fourth embodiment is provided a computer implemented method implementing the steps executed by the computer program according to the second and/or third embodiment.

Disclosed herein according to a fifth embodiment is provided a non-transient computer readable medium comprising the computer program according to the second and/or third embodiment. The non-transitory computer readable medium may comprise a memory unit associated with a processor of the electronic device or other computer-readable storage media for having computer readable program code stored thereon for programming a computer, e.g. a hard disk, a CD-ROM, an optical storage device, a magnetic storage device, Flash memory; a storage device of a server for download of said program.

Disclosed herein according to a sixth embodiment is provided a portable electronic device operable to implement the steps according to the second and/or third embodiment. The electronic device may comprise the computer program according to the second and/or third embodiment. The electronic device may comprise the following subsystems: a processing subsystem; a memory subsystem; a networking subsystem; a display subsystem; and an input/output (I/O) system. The electronic device can be (or can be included in) any electronic device with at least one network interface. For example, the electronic device may comprise (or can be included in) at least one selected from a group consisting of: a laptop computer a media player (such as an MP3 player); a subnotebook/netbook; a tablet computer; a smartphone; a cellular telephone; a set-top box; a personal digital assistant (PDA); a game console; and/or another electronic device. Said device is a portable small form factor device.

Disclosed herein according to a seventh embodiment is provide a method for monitoring container consumption, the method comprising: deriving, at a beverage or foodstuff preparation machine, container consumption information; updating, using the consumption information, stock state information, wherein said stock state information comprises information relating to an amount of containers at a location of the machine, obtaining, at an electronic device external said machine, the updated stock state information; and displaying at the electronic device said amount of stock derived from the updated stock state information. The obtaining at an electronic device of said updated stock state information preferably comprise receiving said information from the machine, alternatively it may comprise determining said information on the electronic device using the consumption information transmitted from the machine.

The method may further comprise, prior to display at said electronic device of the amount of stock, obtaining on the electronic device stock order information, which comprises information detailing an amount of containers purchased by a user and; updating the stock state information using said stock order information. The obtaining of the stock order information preferably comprises receiving said information over a computer network from the remote resource, however it may alternatively comprise generating said information at the electronic device, e.g. as part of an ordering process.

The method may further comprise receiving an input from a user for manual adjustment of the stock state information and deriving therefrom stock state correction information; updating of the stock state information using the stock state correction information; displaying, said updated stock state information. The input is preferably received at the electronic device, in which case if the stock state information is updated thereon it can be directly updated on the electronic device, or if the stock state information is updated on the machine the stock state correction information can be transferred to the machine for update at the machine. Alternatively, the input may be received at the machine for update of the stock state information at said machine.

The method may comprise receiving a user request to order an amount of containers; connecting the electronic device over a computer network to a remote resource; ordering said amount of containers from the remote resource; obtain at the electronic device, associated stock order information and/or a first stock order identifier according to the eighth embodiment. The stock state information may then be updated using the stock order information as discussed above. The user request is preferably received at the electronic device, alternatively it may be received at the machine and relayed via the electronic device to the remote resource. The obtaining of the stock order information and/or first stock order identifier preferably comprises receiving said information over a computer network from the remote resource, however it may alternatively comprise generating said information and/or said first identifier at the electronic device, e.g. as part of an ordering process.

The method may comprise as part of said ordering: authentication of user credentials, e.g. via the transmission of said credentials to the remote resource and authentication thereon. The credentials may comprise a user account identifier and/or password. The identifier may comprise a digital signature made by a private key of the electronic device or other suitable means for authentication of the electronic device by the remote resource.

The method may further comprise comparing, using the stock state information, an amount of the actual stock of containers at a location of said machine to a predetermined value; determining if the stock state is below said value; if below then displaying of a notification to a user.

Disclosed herein according to an eighth embodiment is provide a method for monitoring container consumption, the method comprising: obtaining on the electronic device a first stock order identifier, which is associated with particular stock order information; comparing said identifier to a second stock order identifier, which is either stored a beverage or foodstuff preparation machine, or stored on the electronic device in association with said machine; determining if said identifiers are different, and if different: storing the first stock order identifier as the second stock order identifier or as a further second stock order identifier (i.e. either updating the second stock order identifier with the first stock order identifier or storing the first stock order identifier as a further second stock order identifier); and updating the stock state information using the stock order information associated with the first stock order identifier.

The obtaining on the electronic device of a first stock order identifier preferably comprises obtaining the identifier from a remote resource over a computer network, however it may alternatively comprise generation of the identifier on the electronic device, e.g. as part of an order executed on said device. Determining if said identifiers are different may be performed at the electronic device or at the machine. Storing the first stock order identifier as the or as a further second stock order identifier is preferably performed at the machine, e.g. the first stock order identifier is transmitted to the machine for said purpose. Alternatively said storage may be executed at the electronic device, e.g. storage comprise storing the first identifier as the or as a further second identifier in association with the machine, whereby the machine may have an machine identifier for said association or a particular address space for storage.

The method may comprise, prior to storing the first stock order identifier as the or a further second stock order identifier; obtaining a response from a user of said machine or said device confirming that the stock order associated with the first identifier is to be associated with said machine; if confirmed then storing the first stock order identifier as the second stock order identifier or a further second stock order identifier and updating the stock state information using the stock order information associated with the first stock order identifier; else updating only the second stock order identifier with the first stock order identifier or storing the first stock order identifier as a further second stock order identifier.

The method may comprise each time the electronic device connects to the remote resource, obtaining of the first stock order identifier (preferably said identifier resulting from the last order placed) and processing it in the above manner. An advantage is that the stock order information is automatically checked.

The method may comprise obtaining, preferably from an input/output subsystem of the electronic device or alternatively a user interface of the machine, a user request to order an amount of containers; connecting to a remote resource; effecting ordering of said amount from the remote resource; obtaining from said resource (or from the device itself as part of the order associated stock order information) the resulting stock state information and first stock state identifier, which may then be transmitted to the machine for processing as discussed above.

It will be understood that the seventh and eighth embodiments are complimentary and may in particular be combined.

Disclosed herein according to a ninth embodiment is provide a system for monitoring container consumption. The system may comprise the beverage or foodstuff preparation machine according to the first embodiment and the electronic device according to the according to the sixth embodiment. The system may implement the method according to the seventh and eighth embodiment.

In particular the system may comprise a beverage or foodstuff preparation machine and an electronic device, the beverage or foodstuff preparation machine comprising: a container processing subsystem to process a beverage or foodstuff container to prepare a beverage or foodstuff therefrom: a control subsystem to control the container processing subsystem to prepare the beverage or foodstuff; a consumption monitoring subsystem configured to monitor consumption of containers by said container processing subsystem and to determine therefrom container consumption information relating to said consumption and; a networking subsystem comprising a network interface for communication with an external electronic device over a computer network, preferably Bluetooth^{™} or a near field communication network, wherein the system is configured to: store stock state information, which comprise information relating to an amount of containers at a location of the machine; to update said stock state information using the consumption information and/or obtain, preferably from a remote resource or via generation at the electronic device, stock order information, which comprises information detailing an amount of containers purchased by a user and to update the stock state information using said stock order information; the electronic device configured to: effect the display on a display subsystem thereof the amount of containers at a location of the machine using said updated stock state information.

The system may be operable to: obtain on the electronic device a first stock order identifier, which is associated with stock order information; compare said identifier to a second stock order identifier stored on the electronic device or said machine; determine if said identifiers are different, and if different: store the first stock order identifier as the second stock order identifier or a further second stock order identifier; and update the stock state information using the stock order information associated with the first stock order identifier.

The above embodiments may comprise individualising different types of containers, preferably based on container type and/or contents e.g. coffee capsules can be individualised according to the type of coffee stored therein and the size of the capsule. The aforesaid processes for update of the stock state information may be executed individually for each type of container.

For instance, the stock order information, container consumption information and stock state information are individualised by container type, whereby the stock state information is updated by adjustment of the related quantities of each type of container. Said processes may be executed at the beverage preparation machine and/or the electronic device. In particular the updated stock order information may be displayed on the electronic device to indicate the sock of individual container types. Moreover the stock order identifiers can be associated with individualised stock order information and processed in the manner discussed in the above embodiments for update of the individualised stock state information using the individualised stock order information associated with said identifiers. To determine a container type the container detection unit of the beverage preparation machine may be operable to identify a container type, e.g. by RGB colour sensing or by reading a code of the container, such as an optically readable code that may comprise a barcode or other such code.

The preceding summary is provided for purposes of summarizing some exemplary embodiments to provide a basic understanding of aspects of the subject matter described herein. Other features, aspects, and advantages of the subject matter described herein will become apparent from the following Detailed Description, Figures, and Claims.

### BRIEF DESCRIPTION OF THE FIGURES

Figure 1 is a block diagram illustrating an example implementation of a container consumption monitoring system, which comprises an electronic device wirelessly communicating over a network with a remote resource and a beverage or foodstuff preparation system according to an embodiment of the present disclosure.
Figure 2 is a diagrammatic drawing illustrating the beverage or foodstuff preparation system of the system of figure 1, which comprises a beverage or foodstuff preparation machine and a container according to an embodiment of the present disclosure.
Figure 3 is a system level diagram illustrating a beverage or foodstuff preparation machine of the beverage or foodstuff preparation system of figure 2 according to an embodiment of the present disclosure.
Figure 4 is a block diagram illustrating a control subsystem of the beverage or foodstuff preparation machine of figure 3 according to an embodiment of the present disclosure.
Figure 5 is a block diagram illustrating an implementation of an electronic device of the system of figure 1 according to an embodiment of the present disclosure.
Figure 6 is a flow diagram illustrating a process for updating stock state information of the system of figure 1 according to an embodiment of the present disclosure.
Figure 7 is a flow diagram illustrating a process for updating stock state information of the system of figure 1 according to an embodiment of the present disclosure.
Figure 8 is a diagrammatic drawing illustrating a display of the electronic device of figure 5 according to an embodiment of the present disclosure.

### DETAILED DESCRIPTION OF EXEMPLARY EMBODIMENTS

### Container monitoring system

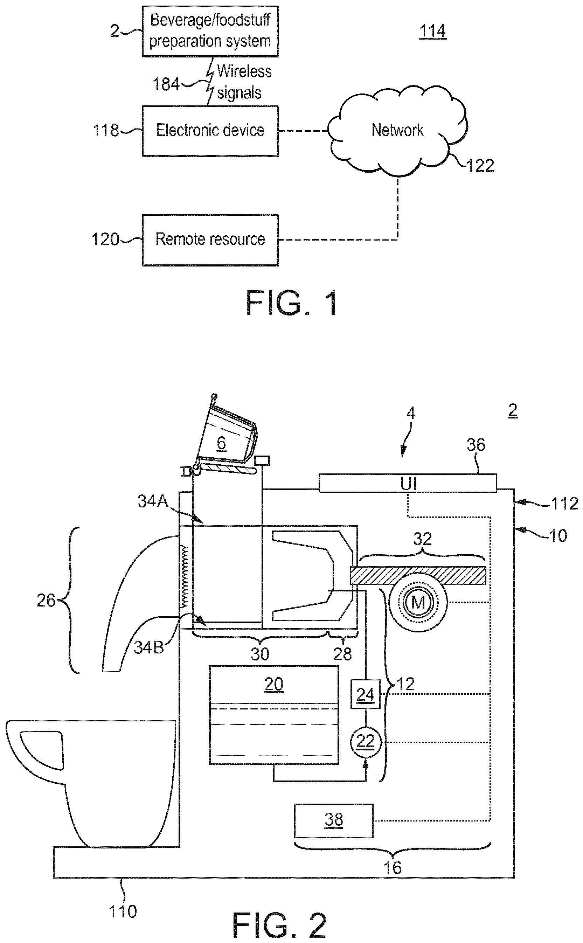

Figure 1 is a block diagram illustrating an embodiment of a beverage or foodstuff preparation and container monitoring system 114, which comprises: a beverage or foodstuff preparation system 2, which itself comprises a beverage or foodstuff preparation machine 4 and associated containers 6; an electronic device 118, which communicates with said system 2 generally via wireless signals 184; and optional a remote resource 120, which communicates with said device118 over a network 122. The following describes these elements of the system 114 individually, followed by some embodiments for monitoring container consumption.

### Beverage or foodstuff preparation system

The beverage or foodstuff preparation machine 4, an embodiment of which is illustrated in figure 2, is operable to process a beverage or foodstuff container containing a portion of beverage or foodstuff material (hereon material) to a foodstuff and/or beverage for consumption by eating and/or drinking. Generally processing comprises the addition of fluid, such as water or milk to said material. A foodstuff material as defined herein may comprise a substance capable of being processed to a nutriment generally for eating, which may be chilled or hot, non-exhaustive examples of which are: yoghurt; mousse; parfait; soup; ice cream; sorbet; custard; smoothies. Generally the foodstuff is a liquid, gel or paste. A beverage material as defined herein may comprise a substance capable of being processed to a potable substance, which may be chilled or hot, non-exhaustive examples of which are: tea; coffee, including ground coffee; hot chocolate; milk; cordial. It will be appreciated that there is a degree of overlap between both definitions, i.e. a said machine 4 can prepare both a foodstuff and a beverage.

The machine 4 is generally dimensioned for use on a work top, i.e. it is less than 70 cm in length, width and height.

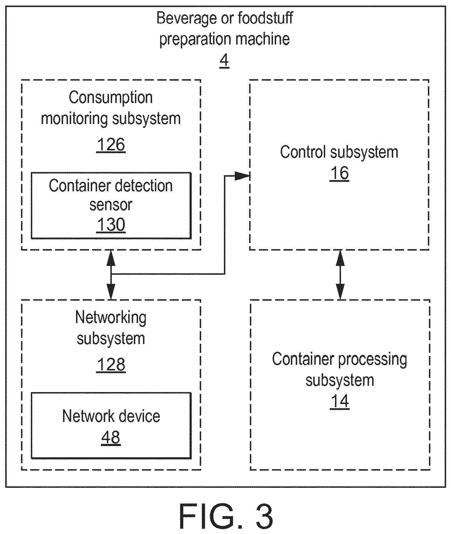

Figure 3 is a block diagram illustrating an embodiment of the machine 4, which comprises: a container processing subsystem 14 to process a beverage or foodstuff container to prepare a beverage or foodstuff therefrom; a control subsystem 16 to control the container processing subsystem to prepare the beverage or foodstuff; a consumption monitoring subsystem 126 configured to monitor consumption of containers by said container processing subsystem; a networking subsystem 128 for communication with the external electronic device 118, all of which are generally arranged in a housing 10.

### Housing

The housing 10 houses and supports the aforesaid subsystems and comprises: a base 110 for abutment of a horizontally arranged support surface; a body 112 for mounting thereto the components of said subsystems.

### Container processing subsystem

Depending on the particular embodiment the container processing subsystem 14 may be configured to prepare a foodstuff/beverage by processing material arranged in: a single-serving, single use container 6 that is a packet or capsule; a container 6 that is a receptacle for end-user consumption therefrom. In particular the material is processed to effect a change of its composition, e.g. by dissolution or extraction or mixing of an ingredient thereof. Embodiments of each configuration of will be discussed.

In general in all the embodiments the container processing subsystem 14 comprises a fluid supply 12 that is operable to supply fluid to the container 6. The fluid is in general water or milk. The fluid maybe conditioned (i.e. heated or cooled). The fluid supply 12 typically comprises: a reservoir 20 for containing fluid, which in most applications is 1 - 5 litres of fluid; a fluid pump 22, such as a reciprocating or rotary pump that may be driven by an electrical motor or an induction coil; an optional fluid heater 24, which generally comprises an in-line, thermoblock type heater; an outlet for supplying the fluid. The reservoir 20, fluid pump 22, fluid heater 24, and outlet are in fluid communication with each other in any suitable order and form a fluid line. The fluid supply 12 may optionally comprise a sensor to measure fluid flow rate and/or the amount of fluid delivered. An example of such a sensor is a flow meter, which may comprises a hall or other suitable sensor to measure rotation of a rotor, a signal from the sensor being provided to the processing subsystem 38 as will be discussed.

### Container processing subsystem for extraction of foodstuff/beverage from container

According to an embodiment the container processing subsystem 14 is operable: to receive the container 6 containing said beverage or foodstuff material; process the container 6 to extract one or more ingredients of a beverage therefrom, and to dispense the said ingredients into an alternate receptacle for end-user consumption. The container is generally a single-use, single-serving container such as a capsule or packet.

A container processing subsystem 14 for use with the said capsule will initially be described, an embodiment of which is shown in figure 2. The container processing subsystem 14 comprises an extraction unit 26 operable to move between a capsule receiving position and a capsule extraction position, when moving from the capsule extraction position to the capsule receiving position, the extraction unit may be moved through or to a capsule ejection position, wherein a spent capsule can be ejected therefrom. The extraction unit 26 receives fluid from the fluid supply 12. The extraction unit 26 typically comprises: an injection head 28; a capsule holder 30; a capsule holder loading system 32; a capsule insertion channel 34A; a capsule ejection channel 34B, which are described sequentially.

The injection head 28 is configured to inject fluid into a cavity of the capsule 6 when held by the capsule holder 30, and to this end has mounted thereto an injector, which has a nozzle that is in fluid communication with the outlet of the fluid supply 12.

The capsule holder 30 is configured to hold the capsule 6 during extraction and to this end it is operatively linked to the injection head 28. The capsule holder 30 is operable to move to implement the said capsule receiving position and capsule extraction position: with the capsule holder in the capsule receiving position a capsule 6 can be supplied to the capsule holder 30 from the capsule insertion channel 34A; with the capsule holder 30 in the capsule extraction position a supplied capsule 6 is held by the holder 30, the injection head 28 can inject fluid into the cavity of the held capsule, and one or more ingredients can be extracted therefrom. When moving the capsule holder 30 from the capsule extraction position to the capsule receiving position, the capsule holder 30 can be moved through or to the said capsule ejection position, wherein a spent capsule 6 can be ejected from the capsule holder 30 via the capsule ejection channel 34B.

The capsule holder loading system 32 is operable to drive the capsule holder 30 between the capsule receiving position and the capsule extraction position.

The aforedescribed container extraction unit 14 is generally a pressurised extraction unit, e.g. the container is hydraulically sealed and subject to 5 - 20 bar during brewing. Generally the pump is an induction pump. The extraction unit may alternatively operate by centrifugation as disclosed in EP 2594171.

The container processing subsystem 14 may alternatively comprise a dissolution unit configured as disclosed in EP 1472156 and in EP 1784344.

In the embodiment of the container 6 comprising a packet the container processing subsystem 14 comprises an extraction and/or dissolution unit operable to receive the packet and to inject, at an inlet thereof, fluid from the fluid supply 12. The injected fluid mixes with material within the packet to at least partially prepare the beverage, which exits the packet via an outlet thereof. The extraction or dissolution unit comprises: a support mechanism to receive an unused packet and eject a spent packet; an injector configured to supply fluid to the packet from the outlet of the fluid supply. Further detail is provided in WO 2014/125123.

### Container processing subsystem for preparation of foodstuff/beverage in container for end user consumption

According to a further embodiment the container processing subsystem 14 (not shown), is generally operable to prepare material stored in a container 6 that is a receptacle, such as a cup, pot or other suitable receptacle configured to hold approximately 150 - 350 ml of prepared product. In an embodiment the container processing subsystem 14 comprises a mixing unit which comprises: agitator unit; an optional auxiliary product unit; thermal exchanger; receptacle support, which will be described sequentially.

The agitator unit is operable to agitate material within the receptacle for at least partial preparation thereof. The agitator unit may comprise any suitable mixing arrangement, e.g. a: planetary mixer; spiral mixer; vertical cut mixer. Typically the agitator unit comprises: an implement for mixing having a mixing head for contact with the material; and a drive unit, such as an electric motor or solenoid, to drive the mixing implement. In a preferred example of a planetary mixer the mixing head comprises an agitator that rotates with a radial angular velocity W1 on an offset shaft that rotates with gyration angular velocity W2, such an arrangement is disclosed in PCT/EP13/072692.

The auxiliary product unit is operable to supply an auxiliary product, such as a topping, to the container 6. The auxiliary product unit comprises: a reservoir to store said product; an electrically operated dispensing system to effect the dispensing of said product from the reservoir.

The thermal exchanger is operable to transfer and/or extract thermal energy from the receptacle. In an example of transfer of thermal energy it may comprise a heater such as thermoblock. In an example of extraction of thermal energy it may comprise heat pump such as a refrigeration-type cycle heat pump. The receptacle support is operable to support the container during a preparation process such that the container remains stationary during agitation of the material therein by the agitator unit. The receptacle support preferably is thermally associated with the thermal exchanger such that transfer of thermal energy can occur with a supported receptacle.

In a variant of the above, the container processing subsystem 14 further comprises a dispensing mechanism for receiving a container 6 (such as a packet) and dispensing the associated material into the receptacle, where it is prepared. Such an embodiment is disclosed in EP 14167344 A.

### Container

Containers suitable for use in the above embodiment container preparation subsystems are known in the art, with examples of which are provided in the references.

In particular the container may be a single-serving container, i.e. it is dimensioned for containing a dosage of beverage or foodstuff material for preparation of a single serving (e.g. pre portioned) of said product. The container may be a single-use container, i.e. it is intended to be used in a single preparation process after which it is preferably rendered unusable, e.g. by perforation, penetration, removal of a lid or exhaustion of said material.

The container may comprise one of the following: capsule; packet; receptacle for end user consumption of the beverage or foodstuff therefrom. The capsule may have an internal volume of 5 - 80 ml. The receptacle may have an internal volume of 150 - 350 ml. The packet may have an internal volume of 150 - 350 ml or 200 - 300 ml or 50 - 150 depending on the application.

### Control subsystem

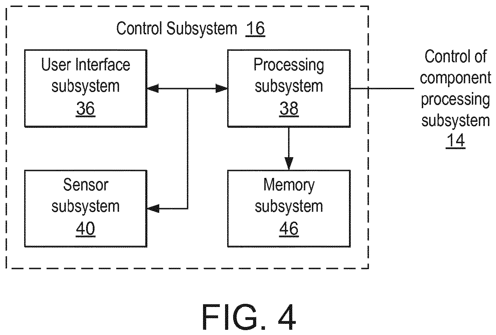

Figure 4 is a block diagram illustrating an embodiment of a control subsystem 16 that is operable to control the container processing subsystem 14 to execute a preparation process, which comprises the preparation of the beverage/foodstuff. The control subsystem 16 generally comprises: a user interface subsystem 36; a processing subsystem 38; an optional sensor subsystem 40; a memory subsystem 46. The user interface subsystem 36 comprises hardware to enable an end user to initiate a preparation process, it is thus operatively connected to the processing subsystem 38. In an embodiment, to indicate the available processes to a user the user interface may comprise an output unit. The output unit may comprise at least one selected from a group consisting of: a display such as a graphic or character liquid crystal display (LCD); light emitting diode (LED) display; LEDs which have indicia associated therewith. To enable a user to select preparation processes the user interface may comprise an input unit. The input unit may comprise: buttons or touch sensing or screen edge buttons associated with the display; buttons associated with LEDs. Commands related to the selection of a preparation process are transferred from the input unit to the processing subsystem 38 as a signal. The user interface may comprise a separate processor (examples of which are provided below) to control the interface hardware.

The sensor subsystem 40 may comprise one or more sensors that provide a signal to the processing subsystem 38 for monitoring a preparation process. The sensors 40 typically comprise one or more of the following: fluid temperature sensors; fluid level sensors; position sensors e.g. for sensing a position of the extraction unit 26; flow rate and/or volume sensors.

The processing subsystem 38 comprises one or more devices configured to perform computational operations, e.g. it may comprise one or more: microprocessors; application specific integrated circuits (ASIC); microcontrollers; programmable logic devices (e.g. a field programmable gate array); digital signal processors (DSP). In particular is it operable to control the components of the component processing subsystem 14 to execute one or more preparation processes. Said control may comprise utilising an input signal from the sensor subsystem 40.

The memory subsystem 46 includes one or more devices for storing data and/or instructions for the processing subsystem 38 and networking subsystem 128. The memory subsystem may comprise dynamic random access memory (DRAM), static random access memory (SRAM) and/or other types of memory. The instructions comprise one or more computer programs which are executable by the processing subsystem 38 as a preparation process. A computer program may be composed of one or more program module. The program modules can be implemented in any suitable manner e.g.: a high-level procedural language; an object orientated language; an assembly or machine language. Moreover said language may be complied or interpreted to be executed by the processing subsystem.

### Consumption monitoring subsystem

The consumption monitoring subsystem 126 is operable to monitor consumption of containers 6 by said container processing subsystem 14 and to determine therefrom container consumption information, which generally comprises a count of containers consumed or preparation processes executed. The consumption monitoring subsystem 126 may share resources of the control subsystem 16 (e.g. the processing subsystem 38 and memory subsystem 46) for obtain, storage and processing of said consumption information.

In an embodiment the consumption monitoring subsystem 126 derives the consumption information from executions of preparation processes by the control subsystem 16, e.g. via storing executions of preparation processes.

In an alternative embodiment the consumption monitoring subsystem 126 comprises a container detection sensor 130 arranged to sense a container in the process of being consumed (e.g. during processing by the container processing subsystem 14 or when supplied to said subsystem or when ejected from said subsystem). In particular, the container detection sensor may be arranged at a container ejection channel 34B to detect containers ejected from the container processing subsystem. An advantage of the latter embodiment is that the consumption monitoring subsystem 126 is operable to more reliably monitor consumption. For instance it can account for preparation a preparation process executed more than once on the same container. The container detection sensor 130 may be selected from a group consisting of: an inductive sensor operable to detect a metallic portion of a container; an optical sensor (e.g. a photo electric sensor); other suitable proximity sensor, such as a sensor that may be configured for capacitive, magnetic or other sensing. The consumption information is thus derived from storing detections of containers from said sensor.

### Networking subsystem

The networking subsystem 128 comprises one or more network devices 48 configured to for data communication between the machine 4 and the electronic device 118. As can be seen in figure 1 data communication is represented by the jagged line 184. Generally signals for data communication are wireless and are transmitted by radio. The networking subsystem may comprise: a Bluetooth^{™} networking system; a cellular networking system (e.g. UMTS, LTE, etc.); a wireless LAN such as described in the IEEE 802.11; a near-field-communication system; other such system. The networking subsystem 128 generally comprises: a communication processor; a controllers; radios/antennas; and/or other devices used for coupling to, communicating on, and handling data and events for each supported networking or communication system.

### Network

Referring to figure 1, the external network 122 is for data communication between the electronic device 118 and the remote resource 120 and comprises any suitable environment in which the embodiments can be implemented. Typically the electronic device 118 is a small form factor portable (or mobile) electronic device (as will be discussed). As such the network typically comprises a wireless network such as a mobile or cellular network, e.g. a GPRS (general packet radio service) system based on GSM (global system for mobile communication) for data communication. Other non-limiting implementations comprise LTE (long-term evolution), UTMS (universal mobile telecommunication system), EDGE (Enhanced data rates for GSM evolution or GPRS), D-AMPS and CDMA2000. The network may further comprise various wired or partially wired networks, e.g.: the internet; wired LAN (local area network); wireless LAN such as described in the Institute of Electronics Engineers (IEEE) 802.11 standard or Bluetooth^{™} from the Bluetooth Special Interest Group of Kirkland Wash; and optional further wireless interfaces such as a near field network interface.

### Remote Resource

Referring to figure 1, the remote resource 120 comprises a resource arranged distant (i.e. at a different location) to the machine 4 and electronic deice 118 and for connection to said device via the network 122. The remote resource 120 generally comprises software to serve requests from the client (e.g. requests for the order of containers and the provision of stock order information and stock order identifiers as will be discussed). It may optionally further comprise a dedicated computer or a cluster thereof. Said resource may comprise a data base server, e.g. Microsoft SQL Server^{™} or Oracle^{™}, for storage of data such as user account information.

### Electronic Device

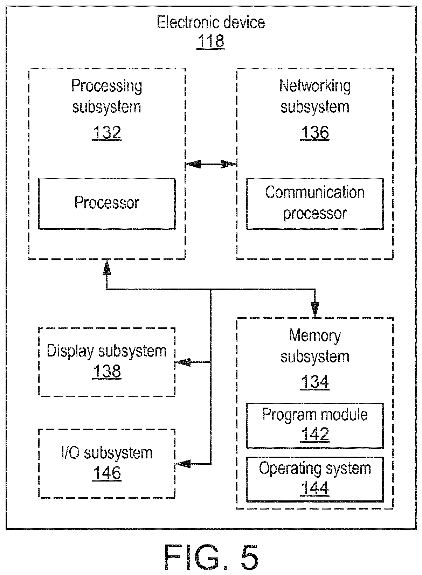

Figure 5 is a block diagram illustrating an example implementation of an electronic device 118. The electronic device 118 is generally operable to transmit and receive wireless signals by a radio, and to process said signals. Said signals may also be via wired communication with a different communication protocol than the wireless signals. Processing said signal generally comprises: receiving wireless signals with a packet or frame; decoding/extracting the packet or frame to acquire the packet or frame; and processing the packet or frame to determine information contained therein. The electronic device 118 generally comprise: a processing subsystem 132; a memory subsystem 134; a networking subsystem 136; a display subsystem 138; and an input/output (I/O) system 146, each of which are described sequentially.

The processing subsystem 132 comprises one or more devices configured to perform computational operations, e.g. it may comprise one or more: microprocessors; application specific integrated circuits (ASIC); microcontrollers; programmable logic devices (e.g. a field programmable gate array); digital signal processors (DSP).

The memory subsystem 134 includes one or more devices for storing data and/or instructions for the processing subsystem 132 and networking subsystem 136. The memory subsystem may comprise dynamic random access memory (DRAM), static random access memory (SRAM) and/or other types of memory. The memory subsystem may further comprise one or more high-capacity mass storage devices, e.g. a magnetic or optical drive; a solid state drive. In such an example the mass storage device can be used for storage of less frequently used data.

The instructions comprise one or more computer programs (e.g. a mobile application) which are executable by the processing subsystem 132. A computer program may be composed of one or more program modules 142. The program modules 142 can be implemented in any suitable manner e.g.: a high-level procedural language; an object orientated language; an assembly or machine language. Moreover said language may be complied or interpreted to be executed by the processing subsystem 132. The instructions may further comprise an operating system 144 to manage the mentioned hardware and software resources.

The networking subsystem 136 comprises one or more devices configured to couple and communicate on a wired and/or wireless network (i.e. to perform networked operations). The networking subsystem may comprise: a Bluetooth^{™} networking system; a cellular networking system (e.g. UMTS, LTE, etc.); a universal serial bus (USB) networking system; a wireless LAN such as described in the IEEE 802.11; wired LAN (local area network); a near-field-communication system; other such system. The networking subsystem 136 generally comprises: a communication processor; a controllers; radios/antennas; and/or other devices used for coupling to, communicating on, and handling data and events for each supported networking or communication system.

The display subsystem 138 is for displaying information on a display (such as information from the executed program), which may include a display driver and the display, such as a liquid-crystal display, a multi-touch touchscreen, etc.

The input/output (I/O) system 146 is operable: to receive user input and to convert said input to digital data for the processing subsystem 132; and to convert digital data from the processor to output to the user. Accordingly the input aspect can comprise suitable input hardware such as: a keyboard/keypad; dial; wheel; touch screen; microphone. The output aspect may comprise suitable output hardware such as: and audio output device, e.g. a speaker; the display subsystem 138.

The electronic device 118 can be (or can be included in) any electronic device with at least one network interface. For example, the electronic device can be (or can be included in): a desktop computer; a laptop computer; a server; a media player (such as an MP3 player); a subnotebook/netbook; a tablet computer; a smartphone; a cellular telephone; a set-top box; a personal digital assistant (PDA); a game console; and/or another electronic device.

Although in the above specific components are used to describe electronic device 118, in alternative examples, different components and/or subsystems may be present. For example, the electronic device may include one or more additional: processing subsystems; memory subsystems; networking subsystems; display subsystems; and/or secure I/O subsystems. Additionally, one or more of the subsystems may not be present in electronic device 110. Moreover, in some examples the electronic device 6 may include one or more additional subsystems that are not shown discussed in the above e.g.: a data collection subsystem; and/or a media processing subsystem.

Although separate subsystems are discussed in the above, some or all of a given subsystem or component thereof can be integrated into one or more of the other subsystems or components thereof, e.g.: in some embodiments the computer programs are included in the operating system 144 of the memory subsystem 134; and the I/O system 146 comprises the display of the display subsystem 138.

### Monitoring of container consumption

According to a first embodiment for consumption monitoring the consumption monitoring subsystem 126 of the beverage preparation machine 4 is operable to update stock state information 148, which comprise information detailing an amount of containers at the location of the machine, to maintain said amount at the correct value. The stock state information is typically stored on a memory, such as the aforesaid memory subsystem 46 of the control subsystem 16 or a dedicated memory of the consumption monitoring sub system 126.

In a first example said update comprises updating the stock state information 148 using the aforementioned consumption information 150. In particular this may comprise a numerical value of consumption derived with each container consumed being subtracted from the numerical value of containers at the location of the machine.

In a second example, said update comprise updating the stock state information 148 using stock order information 152. The latter comprise information detailing an amount of containers purchased by a user. In particular this may comprise summing a numerical value of containers purchased by a user with the numerical value of containers at the location of the machine. Generally the stock order information is received by the networking subsystem 128 and transferred to the consumption monitoring subsystem 126. Generally it is transmitted from the electronic device 118, although it may alternatively be transmitted from the remote resource 120.

Following said update with the first and/or second example, the updated stock state information 148 is typically transferred via the networking subsystem 128 to the electronic device 118 for display as will be discussed.

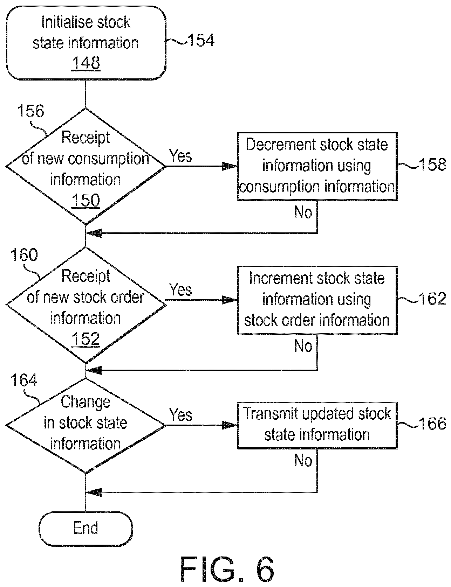

Figure 6 is a flow diagram illustrating the above process. At optional block 154 the stock state information 148 is initialised, e.g. by using an amount of containers supplied with the machine 4 or the previous value associated with said information. Condition 156 comprises determine if new consumption information has been received and block 158 represents subsequent update of the stock state information 148 if true (i.e. by decrementing the amount designated in the stock state information by the amount designated in the consumption information). Condition 156 is typically executed in response to a signal from the container detection sensor 130 (or the control subsystem 16). Condition 160 comprises determining if new stock order information has been received and block 162 represents subsequent update of the stock state information 148 if true (i.e. by summing the amount designated in the stock state information by the amount designated in the stock order information). Condition 164 is typically executed following conditions 156 and 160, whereby if the stock state information has changed block 166 is executed to transmit (or buffer for transmission) said information to the electronic device 118. The process illustrated in figure 6 may be executed according to one or more of the following: periodically; when either of the consumption/stock order information changes; when a network connection to the electronic device 118 is made.

It will be understood that the above process may be adapted with one or more parts thereof being performed at the electronic device 118. For example, in a second embodiment for consumption monitoring, a like process is executed at the electronic device 118, whereby: the consumption information 150 is transmitted to said device from the machine 4; and stock order information 150 is received on said device from the remote resource 120. Moreover, in a third embodiment for consumption monitoring, a like process is executed at the remote resource 120, whereby: the consumption information 150 is transmitted to said resource from the machine 4, optionally via the electronic device 118; and stock order information 152 is received on said resource either via the electronic device or another such device such as a PC.

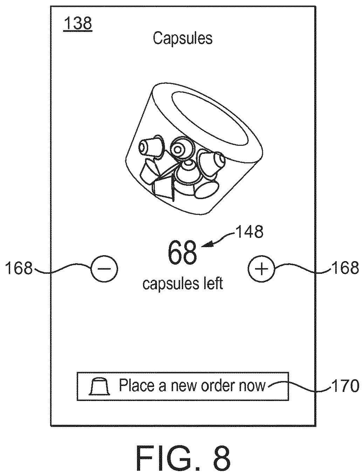

The updated stock state information 148 can (depending on the implementation of the first - third embodiment) be transferred to or derived on the electronic device 118 and subsequently displayed to a user of said device using the display subsystem 138. In particular a computer program 142 operating on said device 118 may be executable to effect automatic display of the stock state information (typically a numerical value thereof is displayed however an indicator such as low medium or high may alternatively be displayed). Figure 8 is a diagrammatic drawing illustrating a display on the display subsystem 128 of the electronic device 118, whereby the stock status information 148 is displayed as having a numerical value of 68. It may also determine the updated stock state information depending on the particular embodiment implemented. Moreover, said program 142 when executed may be configured to automatically connect to the machine 4 for the purpose of either obtaining consumption information 150 or the updated stock state information 148.

In an embodiment, which may be combined with those above a stock order identifier may be processed in association with the stock order information 152. The stock order identifier has associated therewith a particular stock order information 152. In particular the stock order identifier can be used to conveniently identify a particular order of containers. It may for instance comprise a numerical (e.g. binary) or alphanumeric (e.g. ASCII) or other suitable representation, which may optionally be encrypted.

In a first embodiment for processing stock order identifiers a first stock order identifier is received on the electronic device 118 from the remote resource 120 over the network 122. In particular it may be received with the associated stock order information or as a prelude to said information pending fulfilment of the later described condition. More particularly, the aforesaid computer program 142 on the electronic device 118 may be operable to obtain said first identifier in response to an order being placed. Moreover, it may be operable when executed to obtain a connection to the remote resource 120 and obtain the first order identifier for the last order placed.

A second stock order identifier is received on the electronic device 118 from the machine 4. The aforesaid computer program 142 may be operable when executed to obtain a connection to the machine 4 and obtain the second order identifier therefrom.

Utilising the first and second stock order identifiers, the computer program 142 compares the values thereof. If the values are the same then it can be determined that the associated order is old. If the order is old then no action is taken. If the values are different then it can be determined that the associated order is new. If the order is new then the computer program may send the first stock order identifier to the machine 4 for storage thereon, i.e. for storage as the second stock order identifier, or as one of a plurality of second stock identifiers. In addition the associated stock order information 152 can be sent to the machine for update of the stock state information 148 therewith in the manner discussed above. In this way the stock state information is only updated with stock order information relating to new orders (with no update being made for old orders since every time a new order is identified the associated first stock order identifier is stored on the machine to prevent it from being processed as new a second time).

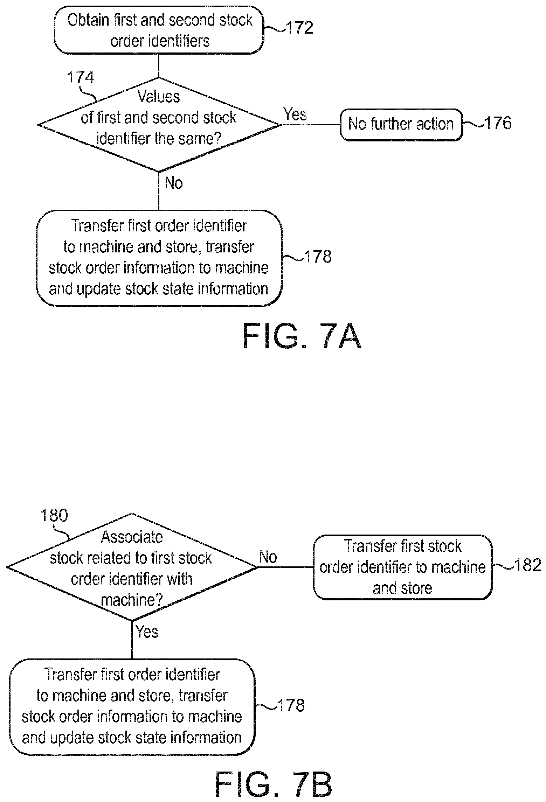

Figure 7A is a flow diagram illustrating the above processes, wherein: block 172 represents the obtaining of first and second stock order identifiers; condition 174 represent determining if said identifiers are the same; if true then then the associated order is identified as old and block 176 is executed to terminate the process; if false then the associated order is identified as new and block 178 is executed whereby the first order identifier and associated stock state information are transferred to the machine.

The aforedescribed first embodiment for processing stock order identifiers may be adapted, for example with various parts of the process executed at the machine 4 or electronic device 118. For instance, in a second embodiment the second stock order identifiers are stored on the electronic device 118 in association with the machine 4 (which can be identified via a machine identifier with a similar configuration to the stock order identifiers), thus they do not require sending to and from the machine 4, whereby the aforedescribed comparing of the values of the first and second stock order identifiers is executed by the computer program 142 as discussed for the first embodiment. In a third embodiment, the first stock identifier is sent to the machine 4 (e.g. via the electronic device 118 or directly via the network 122) and the comparing of the values of the first and second stock order identifiers is executed at the machine 4, i.e. by a corresponding computer program thereon. In such an instance the aforesaid requesting of a response from a user may be achieved by the sending of a message from the machine to the electronic device 118 or by use of the user interface subsystem 36 of the machine 4. In a fourth embodiment the first order identifier may be generated by the computer program of the electronic device (rather than being transmitted from the remote resource 120), where by the other processes are executed as per the first embodiment.

The embodiments for processing stock order identifiers may comprise: in the instance an order is identified as new (i.e. the first and second stock order identifiers are different), the computer program 142 may request a response from the user via the I/O subsystem 146 of the electronic device 118 (or user interface subsystem 36 of the machine 4) prior to taking the subsequent action discussed above. In particular a response as to whether the user would like to associate the stock order information related to the first stock order identifier with the machine 4. Said request is typically displayed on the display subsystem 138 and the response received by the I/O subsystem 146. In the instance the user does wish to associate said order with the machine 4 then the order can be processed as new as discussed above. In the instance the user does not wish to associate said order with the machine 4 then the first stock identifier can be sent to the machine 4 for storage thereon (or stored in association with the machine on the electronic device 118), but the associated stock order information is not used for update of the stock order information, e.g. it is not send to the machine 4. Figure 7B is a flow diagram illustrating this further condition as 180, which can be executed between condition 174 and 178 of figure 7A, wherein block 182 represents the latter instance whereby the stock order information is not updated.

An advantage of implementing this further condition is that a user may purchase containers but choose not to associate them with the machine 4, i.e. they may be for use on a separate machine which is not part of the system 114.

A further advantage is that it enables the computer program to be extended to operate with more than one machine 4 which can form part of the system 114. In particular, in an extension of the embodiment, a plurality of machines are in communication with the computer program 142. A first stock order identifier associated with the new order is received from the remote resource 120. Second stock order identifiers associated with/on each machine 4 of the system 114 are checked against the first stock order identifier. If said identifier is determined as new (i.e. none of the second identifiers are identical to the first identifier) then a user has the option of selecting one of the machines to send the associated stock order information to (whereby the stock state information on/associated with the particular machine can be updated using the received stock order information in the manner discussed above). In addition the first stock order identifier can be sent to/associated with each or just the selected machine to prevent it from being processed as new a second time.

The machine 4 (or electronic device 118) may be configured to store a plurality of second stock order identifiers, e.g. 2 - 20 or 2 - 10, which may be aggregated from multiple past orders. In particular the aforesaid checking if the first and second identifiers are different may comprise checking if the first identifier is the same as all of the second identifiers stored on the machine. In this way previous orders can be prevented from being re-processed. It is preferable to implement such storage as a stack memory paradigm, whereby a new identifier replaces the oldest identifier. An advantage is that minimal control of the memory allocation is required, e.g. it does not need to be periodically purged when full.

In the above embodiments manual adjustment of the stock state information 148 may be enabled. An advantage is that the system more flexible and convenient for a user, e.g. it can account for damage, lost containers, or containers which are purchased elsewhere.

In particular, an input from a user may be received at the I/O subsystem 146 of the electronic device 118, which is processed to determine stock state correction information. The stock state correction information comprising an amount (i.e. numerical value) to increment/decrement the stock state information. In embodiments wherein the stock state information is updated at the machine 4, the stock state correction information may be transmitted to the machine and the stock state correction information is subsequently used to update the stock state information 148 by incrementing or decrementing it by the appropriate amount. The aforedescribed automatic display of the stock state information (i.e. the numerical value) at the electronic device 118 may adjusted by the appropriate amount. For instance: after it has been updated on the machine 4 and transmitted to the electronic device; or in parallel at the electronic device whereby the stock state information is updated on said device. Figure 8 is a diagrammatic drawing illustrating a display on the display subsystem 138 of the electronic device 118, whereby indices 168 of the I/O subsystem are selectable for said adjustment of the stock state information 148. In a variant of the above said input from a user may be received at the user interface 36 of the machine 4, whereby a message comprising the updated stock state information is sent to the electronic device for display on the display subsystem as above.

In the above embodiments, the computer program 142 of the electronic device 118 may be operable to effect the ordering of new containers. The computer program may in particular be operable to receive (i.e. via the I/O subsystem 146) a user request to order user specified or predetermined amount of containers. In the example shown in figure 8 the request is received by the selection of an object 170 associated with a uniform resource locator (URL) for submitting requests to the remote resource 120. In response to receiving said request it may automatically connect via the network 122 to the remote resource 120 send a message to said resource. The message may comprise the quantity and type of containers for purchase. The message may further comprise user credentials for authentication of the user, whereby the remote resource 120 is configured to authenticate the said credentials prior to processing the order. The credentials may comprise a user account identifier and/or password. The identifier may comprise a digital signature made by a private key of the electronic device or other suitable configuration of authentication. It will be appreciated that the message is not restricted to a single item e.g. it may be sent as the payload of a datagram, or as multiple packets depending on the communication protocol.

At the remote resource 120 the message is processed to effect said ordering, which may comprise the preparing and dispatch of the order to an address associated with the user credentials. In particular as part of said processing the remote resource 120 may send corresponding stock order information 152 to the electronic device 118 for update of the stock state information 148 in one of the manners discussed in the above embodiments (e.g. at the electronic device 118 or machine 4). Moreover as part of said processing the remote resource 120 may send a corresponding first stock order identifier to the electronic device 118 for comparison with the second stock state identifiers in accordance with the embodiments discussed above (e.g. prior to or at the same time as sending the stock state information). Whereby the resultant processes following said comparison are executed.

The computer program 142 of the electronic device 118 may be operable to compare, using the stock state information 148, the amount of the actual stock of containers at a location of said machine 4, to a predetermined value, for example, a value between 2 - 30, such as 5 or 10 which may be user defined. If said amount is below said value then it may effect the display (i.e. via the display subsystem 138) of a notification to a user. The notification may comprise a change in colour of the numerical amount relating to the stock state information 148, e.g. of said amount may change from a first colour, such as from green or blue or white, to a second colour, such as to red or orange or yellow, to indicate low stock. In the embodiment shown in figure 8 the amount associated with the stock state 148 is displayed in orange (not shown) when below the predetermined value and in white when above the predetermined value. Alternatively a message comprising characters to notify of low stock is displayed (e.g. 'low container stock' or 'you have less than 10 containers remaining').

In the above embodiments the stock of containers may be individualised. In particular stock may be individualized based on container type and/or contents e.g. coffee capsules can be individualised according to the type of coffee stored therein and the size of the capsule.

With an individualising of stock, the aforesaid processes may be executed individually for each type of container. For example, the stock state information 148 comprise an array with elements detailing the stock of each type of container, whereby the stock order information 152 and consumption information 150 comprise corresponding arrays, and are used in the manner discussed above to update the stock order information by respective addition or subtraction of the associated elements from each other. Moreover, the stock state identifiers can relate to such an array of stock order information. Moreover, the computer program of the electronic device 118 may be configured to display the amount of each container type using the stock state information, and optionally to compare each amount to a predetermined value as defined in the above.

For determination of consumption information 150 relating to container type, the container detection sensor 130 (or an additional sensor) and an optional databased (such as a lookup table) may be configured to identify a container type. For instance by one or more of group consisting of the following: RGB colour sensing for determination of characteristic colours on the containers; reading a code of the container and decoding said code, such as an optically readable code that may comprise a barcode or other such code; inductive or capacitive sensing and comparison to a characteristic value; sensing of a shape of a container and comparison to a characteristic value, e.g. by a proximity sensor or a sensor operable to sense load in response to mechanical deformation; image processing of a graphical image taken from the container and determination of identifying parameters in the image, e.g. of characteristic logo or other identifier thereon. Alternatively an assumption may be made that only particular preparation processes are executed with particular container types, in this way when a particular said process is executed it can be inferred that a particular container type has been consumed and the consumption information is thus derived from the control system 16 thus obviating a sensor to configured to container type.

### LIST OF REFERENCES

**114 Container monitoring system**
   **2 Beverage or Foodstuff Preparation System**
   **4 Beverage or Foodstuff Preparation Machine**
      10 Housing
         110 Base
         112 Body
      14 Container Processing Subsystem
         12 Fluid supply
            20 Reservoir
            22 Fluid pump
            24 fluid thermal exchanger
         26 Extraction Unit
            28 Injection head
            30 Capsule holder
            32 Capsule holder loading system
            34A Capsule insertion channel
            34B Capsule ejection channel
      16 Control Subsystem
         36 User interface subsystem
         38 Processing subsystem
         46 Memory subsystem
         40 Sensor subsystem
      126 Consumption monitoring subsystem
         130 Container detection sensor
      128 Networking subsystem
         48 Network interface
   **6 Container** (capsule/receptacle/packet)
**Electronic device 118**
   132 Processing subsystem
   134 Memory subsystem Programs
      142 Program modules
      144 Operating system
   136 Networking subsystem
   138 Display subsystem
   146 Input/output (I/O) system
**Remote resource 120**
**122 Network**
**184 Network**
**148 Stock state information**
**150 Consumption information**
**152 Stock order information**

## Claims

1. A beverage or foodstuff preparation machine (4) comprising:
a container processing subsystem (14) to process a beverage or foodstuff container (6) to prepare a beverage or foodstuff therefrom:
a control subsystem (16) to control the container processing subsystem (14) to prepare the beverage or foodstuff;
a consumption monitoring subsystem (126) configured to monitor consumption of containers by said container processing subsystem (14) and to determine therefrom container consumption information relating to said consumption and;
a networking subsystem (128) comprising a wireless network interface (48) for communication with an external portable electronic device (118) over a network (184), wherein the wireless network interface (48) is for example a Bluetooth^{™} or a near field communication interface;
wherein the consumption monitoring subsystem (126) is configured:
- to store stock state information (148), which comprise information relating to an amount of containers at a location of the machine (4);
- to update said stock state information (148) using the consumption information; receive, via the networking subsystem (128), stock order information (152), which comprises information detailing an amount of containers purchased by a user;
- and to further update the stock state information (148) using said stock order information (152);
- and to transmit, via the networking subsystem (128), said further updated stock state information (148) to said portable electronic device (118)
**characterised in that** the consumption monitoring subsystem (126) is further configured:
- to receive, via the networking subsystem (128), a first stock order identifier which is associated with stock order information (152);
- to compare the first stock order identifier to a second stock order identifier stored on the portable electronic device (118) or said machine (4);
- to determine if said identifiers are different, and if different: store the first stock order identifier as the second stock order identifier or as a further second stock order identifier on either the portable electronic device (118) or the said machine (4);
- to update the stock state information (148) using the stock order information (152) associated with the first stock order identifier.

2. The beverage or foodstuff preparation machine (4) of claim 1, wherein the consumption monitoring subsystem (126) is configured to:
- transmit, via the networking subsystem (128), the or each stored second stock order identifier to the portable electronic device (118) in response to a request from said device (118) or upon achieving a network connection to said device (118).

3. The beverage or foodstuff preparation machine (4) according to any of the preceding claims, wherein the consumption monitoring subsystem (126) is configured:
- to receive from the portable electronic device (118), via the networking subsystem(128), stockstate correction information, which comprise information detailing a manual correction to the stock state information (148);
- and to correct said stock state information (148) using the stock state correction information.

4. The beverage or foodstuff preparation machine (4) of any of the preceding claims, wherein the consumption monitoring subsystem (126) comprises a container detection sensor (130) arranged at a container ejection channel (34B) of the container processing subsystem (14), said sensor (130) to detect spent containers ejected from the container processing subsystem (14), whereby the consumption monitoring subsystem (126) is operable to update the consumption information (150) using a signal from said sensor (130).

5. The beverage or foodstuff preparation machine (5) of any of the preceding claims wherein said first stock order identifier and said at least one second stock order identifier are stored as a stack memory such that a recent identifier replaces an older identifier.

6. A computer program executable on a portable electronic device (118), said program comprising instructions for:
- obtaining, via a networking subsystem (136) of said device (118), a wireless network connection to a beverage or foodstuff preparation machine (4) according to any one of the preceeding claims;
- obtaining, from said beverage or foodstuff preparation machine (4), stock state information (148), which comprises relating to an amount of the actual stock of containers at a location of said machine (4) or information for determining said stock state information (148) and determine the stock state information (148) therefrom; and
- obtaining, from a remote resource (120) via the networking subsystem (136), stock order information (152), which comprises an amount of containers purchased by a user; and transmit, via the networking subsystem (136) said information to the beverage or foodstuff preparation machine (4);
- effecting the display of said amount of stock on a display subsystem (138) of the portable electronic device (118);
**characterised in that** the computer program further comprises instructions for:
- obtaining, from the remote resource (120) via the networking subsystem (136), a first stock order identifier, which is associated with said stock order information (152);
- obtaining, from the beverage or foodstuff preparation machine (4) via the networking subsystem (136), a second stock order identifier;
- determining if said identifiers are different;
- if different then effecting the transmission of both the first stock order identifier and the associated stock order information received from the remote resource (120) to said machine (4).

7. The computer program of claim 6 wherein said computer program is furthermore configured to:
- prior to performing said transmissions, effect the obtaining of a response from a user via an input/output subsystem (146) of the portable electronic device (118) to confirm whether the stock order is to be associated with the machine (4);
- if confirmed then to execute said transmission of the first stock order identifier and associated stock order information (152);
- else to transmit only the first stock order identifier.

8. The computer program of any of claims 6 or 7, wherein the computer program is configured to:
- obtain an input via an input/output subsystem (146) of the portable electronic device (118) for manual adjustment of the stock state information (148)
- and derive therefrom stock state correction information;
- effect the transmission of said stock state correction information to the beverage or foodstuff preparation machine (4) for update of the stock state information (148) stored thereon;
- and/or wherein the computer program is configured to:
- obtain from an input/output subsystem (146) of the portable electronic device (118) a user request to order an amount of containers; connect to a remote resource (120);
- effect ordering of said amount from the remote resource (120);
- obtain from said resource (120) associated stock order information (152) and an optional first stock order identifier associated therewith.

9. The computer program of any of claims 6 - 8, wherein the computer program is configured to:
- compare, using the stock state information (148), the amount of the actual stock of containers to a predetermined value;
- determine if the stock state is below said value;
- if below then effect the provision of a notification to a user via the input/output subsystem (146) of the portable electronic device (118).

10. A method for monitoring beverage or foodstuff container consumption comprising:
- deriving, at a beverage or foodstuff preparation machine (4) according to claims 1-5, container consumption information (150);
- updating, using the consumption information (150), stock state information (148), wherein said stock state information (148) comprise information detailing an amount of containers at a location of the machine (4),
- obtaining at a portable electronic device (118) external said machine (4) the updated stock state information (148); and
- obtaining on the portable electronic device (118) stock order information, which comprises information detailing an amount of containers purchased by a user and;
- updating the stock state information (148) using said stock order information (152);
- displaying at the portable electronic device (118) said amount of stock derived from the updated stock state information (148);
**characterised in that** it further comprises:
- obtaining, on the portable electronic device (118) a first stock order identifier, which is associated with stock order information (152);
- comparing the first stock order identifier to a second stock order identifier stored on the portable electronic device (118) or said machine (4);
- determining if said identifiers are different, and if different: storing the first stock order identifier as the second stock order identifier or as a further second stock order identifier on either the portable electronic device (118) or the said machine (4); and
- updating the stock state information (148) using the stock order information (152) associated with the first stock order identifier.

11. The method of claim 10 further comprising, prior to storing the first stock order identifier as the second stock order identifier or as a further second stock order identifier:
- obtaining a response from a user of said machine (4) or said device (118) confirming that thstock order associated with the first identifier is to be associated with said machine (4);
- if confirmed then;
- storing the first stock order identifier as the second stock order identifier or as a further second stock order identifier;
- and updating the stock state information (148) using the stock order information (152) associated with the first stock order identifier;
- else only storing the first stock order identifier as the second stock order identifier or as a further second stock order identifier.

12. The method of any of claims 10 or 11 further comprising:
- receiving an input from a user for manual adjustment of the stock state information (148);
- and deriving therefrom stock state correction information;
- updating of the stock state information (148) using the stock state correction information;
- displaying, said updated stock state information (148).

13. The method of any of the claims 10-12 further comprising:
- receiving a user request to order an amount of containers;
- connecting the portable electronic device (118) over a computer network (138) to a remote resource (120);
- ordering said amount of containers from the remote resource (120);
- obtaining at the portable electronic device (118), associated stock order information and/or a first stock order identifier.

14. The method of any of claims 10-13 further comprising:
- comparing, using the stock state information (148), an amount of the actual stock of containers at a location of said machine (4) to a predetermined value;
- determining if the stock state is below said value;
- if below then displaying of a notification to a user.

## Patentansprüche

1. Getränke- oder Lebensmittelzubereitungsmaschine (4), umfassend:
ein Behälterverarbeitungssubsystem (14) zur Verarbeitung eines Getränke- oder Lebensmittelbehälters (6), um daraus ein Getränk oder Lebensmittel zuzubereiten:
ein Steuerungssubsystem (16) zur Steuerung des Behälterverarbeitungssubsystems (14) zur Zubereitung des Getränks oder Lebensmittels;
ein Verbrauchsüberwachungssubsystem (126), das so konfiguriert ist, dass es den Verbrauch von Behältern durch das Behälterverarbeitungssubsystem (14) überwacht und daraus Informationen über den Behälterverbrauch bestimmt, die sich auf diesen Verbrauch beziehen, und;
ein Netzwerksubsystem (128), das eine drahtlose Netzwerkschnittstelle (48) zur Kommunikation mit einer externen tragbaren elektronischen Vorrichtung (118) über ein Netzwerk (184) umfasst, wobei die drahtlose Netzwerkschnittstelle (48) beispielsweise eine Bluetooth^{™}- oder eine Nahfeldkommunikationsschnittstelle ist;
wobei das Verbrauchsüberwachungssubsystem (126) konfiguriert ist:
- zum Speichern von Lagerbestandsinformationen (148), die Informationen bezüglich einer Menge von Behältern an einem Standort der Maschine (4) umfassen;
- zum Aktualisieren der Lagerbestandsinformationen (148) unter Verwendung der Verbrauchsinformationen; zum Empfangen, über das Netzwerksubsystem (128), von Lagerbestellungsinformationen (152), die Informationen über eine von einem Benutzer gekaufte Menge von Behältern umfassen;
- und ferner zum Aktualisieren der Lagerbestandsinformationen (148) unter Verwendung der Lagerbestellungsinformationen (152);
- und zum Übertragen, über das Netzwerksubsystem (128), der ferner aktualisierten Lagerbestandsinformationen (148) an die tragbare elektronische Vorrichtung (118),
**dadurch gekennzeichnet, dass** das Verbrauchsüberwachungssubsystem (126) ferner konfiguriert ist:
- zum Empfangen, über das Netzwerksubsystem (128) einer ersten Lagerbestellungskennung, die Lagerbestellungsinformationen (152) zugeordnet ist;
- zum Vergleichen der ersten Lagerbestellungskennung mit einer zweiten Lagerbestellungskennung, die auf der tragbaren elektronischen Vorrichtung (118) oder der Maschine (4) gespeichert ist;
- zum Bestimmen, ob die Kennungen unterschiedlich sind, und wenn sie unterschiedlich sind: Speichern der ersten Lagerbestellungskennung als die zweite Lagerbestellungskennung oder als eine weitere zweite Lagerbestellungskennung entweder in der tragbaren elektronischen Vorrichtung (118) oder in der Maschine (4);
- zum Aktualisieren der Lagerbestandsinformationen (148) unter Verwendung der Lagerbestellungsinformationen (152), die der ersten Lagerbestellungskennung zugeordnet sind.

2. Getränke- oder Lebensmittelzubereitungsmaschine (4) nach Anspruch 1, wobei das Verbrauchsüberwachungssubsystem (126) konfiguriert ist zum:
- Übertragen, über das Netzwerksubsystem (128), der oder jeder gespeicherten zweiten Lagerbestellungskennung an die tragbare elektronische Vorrichtung (118) als Reaktion auf eine Anforderung von der Vorrichtung (118) oder bei Erreichen einer Netzwerkverbindung mit der Vorrichtung (118).

3. Getränke- oder Lebensmittelzubereitungsmaschine (4) nach einem der vorstehenden Ansprüche, wobei das Verbrauchsüberwachungssubsystem (126) konfiguriert ist:
- zum Empfangen, über das Netzwerksubsystem (128), von Lagerbestandskorrekturinformationen von der tragbaren elektronischen Vorrichtung (118), die Informationen umfassen, die eine manuelle Korrektur der Lagerbestandsinformationen (148) beschreiben;
- und zur Korrektur der Lagerbestandsinformationen (148) unter Verwendung der Lagerbestandskorrekturinformationen.

4. Getränke- oder Lebensmittelzubereitungsmaschine (4) nach einem der vorstehenden Ansprüche, wobei das Verbrauchsüberwachungssubsystem (126) einen Behältererfassungssensor (130) umfasst, der an einem Behälterauswurfkanal (34B) des Behälterverarbeitungssubsystems (14) angeordnet ist, wobei der Sensor (130) dazu dient, verbrauchte Behälter zu erfassen, die aus dem Behälterverarbeitungssubsystem (14) ausgeworfen werden, wobei das Verbrauchsüberwachungssubsystem (126) betriebsfähig ist, um die Verbrauchsinformationen (150) unter Verwendung eines Signals von dem Sensor (130) zu aktualisieren.

5. Getränke- oder Lebensmittelzubereitungsmaschine (5) nach einem der vorstehenden Ansprüche, wobei die erste Lagerbestellungskennung und die mindestens eine zweite Lagerbestellungskennung als Stapelspeicher gespeichert sind, sodass eine neuere Kennung eine ältere Kennung ersetzt.

6. Computerprogramm, das auf einer elektronischen Vorrichtung (118) ausführbar ist, wobei das Programm konfiguriert ist zum:
- Erhalten, über ein Netzwerksubsystem (136) der Vorrichtung (118), einer drahtlosen Netzwerkverbindung zu einer Getränke- oder Lebensmittelzubereitungsmaschine (4) nach einem der vorstehenden Ansprüche;
- Erhalten, von der Getränke- oder Lebensmittelzubereitungsmaschine (4), von Lagerbestandsinformationen (148), die einen Bezug zu einer Menge des tatsächlichen Lagerbestands an Behältern an einem Standort der Maschine (4) oder Informationen zur Bestimmung der Lagerbestandsinformationen (148) umfassen, und Bestimmen der Lagerbestandsinformationen (148) aus diesen; und
- Erhalten, von einer entfernten Ressource (120) über das Netzwerksubsystem (136), von Lagerbestellungsinformationen (152), die eine Menge von Behältern umfassen, die von einem Benutzer gekauft wurden; und Übertragen dieser Information über das Netzwerksubsystem (136) an die Getränke- oder Lebensmittelzubereitungsmaschine (4);
- Veranlassen der Anzeige der Menge des Lagerbestands auf einem Anzeigesubsystem (138) der tragbaren elektronischen Vorrichtung (118);
**dadurch gekennzeichnet, dass** das Computerprogramm ferner Anweisungen umfasst zum:
- Erhalten, von der entfernten Ressource (120) über das Netzwerksubsystem (136), einer ersten Lagerbestellungskennung, die den Lagerbestellungsinformationen (152) zugeordnet ist;
- Erhalten einer zweiten Lagerbestellungskennung von der Getränke- oder Lebensmittelzubereitungsmaschine (4) über das Netzwerksubsystem (136);
- Bestimmen, ob die Kennungen unterschiedlich sind;
- falls diese unterschiedlich sind, dann Veranlassen der Übertragung sowohl der ersten Lagerbestellungskennung als auch der zugehörigen Lagerbestellungsinformationen, die von der entfernten Ressource (120) empfangen wurden, an die Maschine (4).

7. Computerprogramm nach Anspruch 6, wobei das Computerprogramm ferner konfiguriert ist zum:
- vor dem Durchführen der Übertragungen, Veranlassen des Erhaltens einer Antwort von einem Benutzer über ein Eingabe-/Ausgabesubsystem (146) der tragbaren elektronischen Vorrichtung (118), um zu bestätigen, ob die Lagerbestellung der Maschine (4) zugeordnet werden soll;
- wenn dies bestätigt wird, Ausführen der Übertragung der ersten Lagerbestellungskennung und der zugehörigen Lagerbestellungsinformationen (152);
- andernfalls nur Übertragung der ersten Lagerbestellungskennung.

8. Computerprogramm nach einem der Ansprüche 6 oder 7, wobei das Computerprogramm konfiguriert ist zum:
- Erhalten einer Eingabe über ein Eingabe-/Ausgabesubsystem (146) der tragbaren elektronischen Vorrichtung (118) zur manuellen Einstellung der Lagerbestandsinformationen (148)
- und Ableiten von Lagerbestandskorrekturinformationen daraus;
- Veranlassen der Übertragung der Lagerbestandskorrekturinformationen an die Getränke- oder Lebensmittelzubereitungsmaschine (4) zum Aktualisieren der darauf gespeicherten Lagerbestandsinformationen (148);
- und/oder wobei das Computerprogramm konfiguriert ist zum:
- Erhalten, von einem Eingabe-/Ausgabesubsystem (146) der tragbaren elektronischen Vorrichtung (118), einer Benutzeranforderung, um eine Menge von Behältern zu bestellen; Verbinden mit einer entfernten Ressource (120);
- Veranlassen der Bestellung der Menge von der entfernten Ressource (120);
- Erhalten von der Ressource (120) zugehöriger Lagerbestellungsinformationen (152) und einer optionalen ersten Lagerbestellungskennung, die diesen zugeordnet ist.

9. Computerprogramm nach einem der Ansprüche 6 bis 8, wobei das Computerprogramm konfiguriert ist zum:
- Vergleichen, unter Verwendung der Lagerbestandsinformationen (148), der Menge des tatsächlichen Bestands von Behältern zu einem vorbestimmten Wert;
- Bestimmen, ob der Lagerbestand unter dem Wert liegt;
- wenn dieser darunter liegt, dann Veranlassen der Bereitstellung einer Benachrichtigung an einen Benutzer über das Eingabe-/Ausgabesubsystem (146) der tragbaren elektronischen Vorrichtung (118).

10. Verfahren zum Überwachen von Getränke- oder Lebensmittelbehälterverbrauch, umfassend:
- Ableiten, an einer Getränke- oder Lebensmittelzubereitungsmaschine (4) nach den Ansprüchen 1 bis 5, von Behälterverbrauchsinformationen (150);
- Aktualisieren, unter Verwendung der Verbrauchsinformationen (150), von Lagerbestandsinformationen (148), wobei die Lagerbestandsinformationen (148) Informationen umfassen, die eine Menge von Behältern an einem Standort der Maschine (4) angeben,
- Erhalten, an einer tragbaren elektronischen Vorrichtung (118) außerhalb der Maschine (4), der aktualisierten Lagerbestandsinformationen (148); und
- Erhalten, auf der tragbaren elektronischen Vorrichtung (118), von Lagerbestellungsinformationen, die Informationen umfassen, die eine Menge von Behältern angeben, die durch einen Benutzer gekauft wurden; und
- Aktualisieren der Lagerbestandsinformationen (148) unter Verwendung der Lagerbestellungsinformationen (152);
- Anzeigen, an der tragbaren elektronischen Vorrichtung (118), der aus den aktualisierten Lagerbestandsinformationen (148) abgeleiteten Bestandsmenge;
**dadurch gekennzeichnet, dass** es ferner umfasst:
- Erhalten, an der tragbaren elektronischen Vorrichtung (118), einer ersten Lagerbestellungskennung, die Lagerbestellungsinformationen (152) zugeordnet ist;
- Vergleichen der ersten Lagerbestellungskennung mit einer zweiten Lagerbestellungskennung, die auf der tragbaren elektronischen Vorrichtung (118) oder der Maschine (4) gespeichert ist;
- Bestimmen, ob die Kennungen unterschiedlich sind, und wenn sie unterschiedlich sind: Speichern der ersten Lagerbestellungskennung als die zweite Lagerbestellungskennung oder als eine weitere zweite Lagerbestellungskennung entweder in der tragbaren elektronischen Vorrichtung (118) oder in der Maschine (4); und
- Aktualisieren der Lagerbestandsinformationen (148) unter Verwendung der Lagerbestellungsinformationen (152), die der ersten Lagerbestellungskennung zugeordnet sind.

11. Verfahren nach Anspruch 10, ferner umfassend, vor dem Speichern der ersten Lagerbestellungskennung als zweite Lagerbestellungskennung oder als weitere zweite Lagerbestellungskennung:
- Erhalten einer Antwort von einem Benutzer der Maschine (4) oder der Vorrichtung (118), die bestätigt, dass die Lagerbestellung, die der ersten Kennung zugeordnet ist, der Maschine (4) zugeordnet werden soll;
- falls bestätigt, dann;
- Speichern der ersten Lagerbestellungskennung als die zweite Lagerbestellungskennung oder als eine weitere zweite Lagerbestellungskennung;
- und Aktualisieren der Lagerbestandsinformationen (148) unter Verwendung der Lagerbestellungsinformationen (152), die der ersten Lagerbestellungskennung zugeordnet sind;
- andernfalls nur Speichern der ersten Lagerbestellungskennung als zweite Lagerbestellungskennung oder als eine weitere zweite Lagerbestellungskennung.

12. Verfahren nach einem der Ansprüche 10 oder 11, ferner umfassend:
- Empfangen einer Eingabe von einem Benutzer zum manuellen Anpassen der Lagerbestandsinformationen (148);
- und Ableiten von Lagerbestandskorrekturinformationen daraus;
- Aktualisieren der Lagerbestandsinformationen (148) unter Verwendung der Lagerbestandskorrekturinformationen;
- Anzeigen der aktualisierten Lagerbestandsinformationen (148).

13. Verfahren nach einem der Ansprüche 10 bis 12, ferner umfassend:
- Empfangen einer Benutzeranforderung, um eine Menge von Behältern zu bestellen;
- Verbinden der tragbaren elektronischen Vorrichtung (118) über ein Computernetzwerk (138) mit einer entfernten Ressource (120);
- Bestellen der Menge von Behältern von der entfernten Ressource (120);
- Erhalten, an der tragbaren elektronischen Vorrichtung (118), von zugehörigen Lagerbestellungsinformationen und/oder einer ersten Lagerbestellungskennung.

14. Verfahren nach einem der Ansprüche 10 bis 13, ferner umfassend:
- Vergleichen, unter Verwendung der Lagerbestandsinformationen (148), einer Menge des tatsächlichen Bestands von Behältern an einer Stelle der Maschine (4) mit einem vorbestimmten Wert;
- Bestimmen, ob der Lagerbestand unter dem Wert liegt;
- wenn dieser darunter liegt, dann Anzeigen einer Benachrichtigung für einen Benutzer.

## Revendications

1. Machine de préparation de boisson ou de produit alimentaire (4) comprenant :
un sous-système de traitement de récipient (14) pour traiter un récipient de boisson ou de produit alimentaire (6) pour préparer une boisson ou un produit alimentaire depuis celui-ci :
un sous-système de commande (16) pour commander le sous-système de traitement de récipient (14) pour préparer la boisson ou le produit alimentaire ;
un sous-système de surveillance de consommation (126) configuré pour surveiller la consommation de récipients par ledit sous-système de traitement de récipient (14) et pour déterminer depuis celui-ci des informations de consommation de récipients se rapportant à ladite consommation et ;
un sous-système de mise en réseau (128) comprenant une interface de réseau sans fil (48) pour une communication avec un dispositif électronique portable (118) externe sur un réseau (184), dans laquelle l'interface de réseau sans fil (48) est par exemple une interface Bluetooth^{™} ou une interface de communication en champ proche ;
dans laquelle le sous-système de surveillance de consommation (126) est configuré :
- pour enregistrer des informations d'état de stock (148), qui comprennent des informations se rapportant à une quantité de récipients au niveau d'un emplacement de la machine (4) ;
- pour mettre à jour lesdites informations d'état de stock (148) en utilisant les informations de consommation ; recevoir, par l'intermédiaire du sous-système de mise en réseau (128), des informations de commande de stock (152), qui comprennent des informations détaillant une quantité de récipients achetés par un utilisateur ;
- et pour mettre en outre à jour les informations d'état de stock (148) en utilisant lesdites informations de commande de stock (152) ;
- et pour transmettre, par l'intermédiaire du sous-système de mise en réseau (128), lesdites informations d'état de stock (148) mises en outre à jour audit dispositif électronique portable (118)
**caractérisée en ce que** le sous-système de surveillance de consommation (126) est en outre configuré :
- pour recevoir, par l'intermédiaire du sous-système de mise en réseau (128), un premier identifiant de commande de stock qui est associé à des informations de commande de stock (152) ;
- pour comparer le premier identifiant de commande de stock à un second identifiant de commande de stock enregistré sur le dispositif électronique portable (118) ou ladite machine (4) ;
- pour déterminer si lesdits identifiants sont différents, et s'ils sont différents : enregistrer le premier identifiant de commande de stock en tant que second identifiant de commande de stock ou en tant que second identifiant supplémentaire de commande de stock soit sur le dispositif électronique portable (118) soit sur ladite machine (4) ;
- pour mettre à jour les informations d'état de stock (148) en utilisant les informations de commande de stock (152) associées au premier identifiant de commande de stock.

2. Machine de préparation de boisson ou de produit alimentaire (4) selon la revendication 1, dans laquelle le sous-système de surveillance de consommation (126) est configuré pour :
- transmettre, par l'intermédiaire du sous-système de mise en réseau (128), le ou chaque second identifiant de commande de stock enregistré au dispositif électronique portable (118) en réponse à une demande dudit dispositif (118) ou lors de l'établissement d'une connexion de réseau audit dispositif (118).

3. Machine de préparation de boisson ou de produit alimentaire (4) selon l'une quelconque des revendications précédentes, dans laquelle le sous-système de surveillance de consommation (126) est configuré :
- pour recevoir du dispositif électronique portable (118), par l'intermédiaire du sous-système de mise en réseau (128), des informations de correction d'état de stock, qui comprennent des informations détaillant une correction manuelle des informations d'état de stock (148) ;
- et pour corriger lesdites informations d'état de stock (148) en utilisant les informations de correction d'état de stock.

4. Machine de préparation de boisson ou de produit alimentaire (4) selon l'une quelconque des revendications précédentes, dans laquelle le sous-système de surveillance de consommation (126) comprend un capteur de détection de récipient (130) agencé au niveau d'un canal d'éjection de récipient (34B) du sous-système de traitement de récipient (14), ledit capteur (130) destiné à détecter des récipients usagés éjectés depuis le sous-système de traitement de récipient (14), moyennant quoi le sous-système de surveillance de consommation (126) est opérable pour mettre à jour les informations de consommation (150) en utilisant un signal dudit capteur (130).

5. Machine de préparation de boisson ou de produit alimentaire (5) selon l'une quelconque des revendications précédentes, dans laquelle ledit premier identifiant de commande de stock et ledit au moins un second identifiant de commande de stock sont enregistrés en tant que mémoire de pile de telle sorte qu'un identifiant récent remplace un identifiant plus ancien.

6. Programme informatique exécutable sur un dispositif électronique portable (118), ledit programme comprenant des instructions pour :
- l'obtention, par l'intermédiaire d'un sous-système de mise en réseau (136) dudit dispositif (118), d'une connexion de réseau sans fil à une machine de préparation de boisson ou de produit alimentaire (4) selon l'une quelconque des revendications précédentes ;
- l'obtention, depuis ladite machine de préparation de boisson ou de produit alimentaire (4), d'informations d'état de stock (148), qui comprennent se rapporter à une quantité du stock réel de récipients au niveau d'un emplacement de ladite machine (4) ou d'informations pour la détermination desdites informations d'état de stock (148) et déterminer les informations d'état de stock (148) depuis celles-ci ; et
- l'obtention, depuis une ressource distante (120) par l'intermédiaire du sous-système de mise en réseau (136), d'informations de commande de stock (152), qui comprennent une quantité de récipients achetés par un utilisateur ; et transmettre, par l'intermédiaire du sous-système de mise en réseau (136) lesdites informations à la machine de préparation de boisson ou de produit alimentaire (4) ;
- la réalisation de l'affichage de ladite quantité de stock sur un sous-système d'affichage (138) du dispositif électronique portable (118) ;
**caractérisé en ce que** le programme informatique comprend en outre des instructions pour :
- l'obtention, depuis la ressource distante (120) par l'intermédiaire du sous-système de mise en réseau (136), d'un premier identifiant de commande de stock, qui est associé auxdites informations de commande de stock (152) ;
- l'obtention, depuis la machine de préparation de boisson ou de produit alimentaire (4) par l'intermédiaire du sous-système de mise en réseau (136), d'un second identifiant de commande de stock ;
- la détermination de si lesdits identifiants sont différents ;
- s'ils sont différents alors la réalisation de la transmission à la fois du premier identifiant de commande de stock et des informations de commande de stock associées reçues depuis la ressource distante (120) à ladite machine (4).

7. Programme informatique selon la revendication 6 dans lequel ledit programme informatique est de plus configuré pour :
- avant l'exécution desdites transmissions, réaliser l'obtention d'une réponse d'un utilisateur par l'intermédiaire d'un sous-système d'entrée/sortie (146) du dispositif électronique portable (118) pour confirmer si la commande de stock doit être associée à la machine (4) ;
- si cela est confirmé alors exécuter ladite transmission du premier identifiant de commande de stock et des informations de commande de stock (152) associées ;
- sinon transmettre uniquement le premier identifiant de commande de stock.

8. Programme informatique selon l'une quelconque des revendications 6 ou 7, dans lequel le programme informatique est configuré pour :
- obtenir une entrée par l'intermédiaire d'un sous-système d'entrée/sortie (146) du dispositif électronique portable (118) pour un ajustement manuel des informations d'état de stock (148)
- et déduire depuis celles-ci des informations de correction d'état de stock ;
- réaliser la transmission desdites informations de correction d'état de stock à la machine de préparation de boisson ou de produit alimentaire (4) pour la mise à jour des informations d'état de stock (148) enregistrées sur celle-ci ;
- et/ou dans lequel le programme informatique est configuré pour :
- obtenir depuis un sous-système d'entrée/sortie (146) du dispositif électronique portable (118) une demande d'utilisateur pour commander une quantité de récipients ; se connecter à une ressource distante (120) ;
- réaliser la commande de ladite quantité depuis la ressource distante (120) ;
- obtenir depuis ladite ressource (120) des informations de commande de stock (152) associées et un premier identifiant de commande de stock facultatif associé à celles-ci.

9. Programme informatique selon l'une quelconque des revendications 6 à 8, dans lequel le programme informatique est configuré pour :
- comparer, en utilisant les informations d'état de stock (148), la quantité du stock réel de récipients à une valeur prédéterminée ;
- déterminer si l'état de stock est inférieur à ladite valeur ;
- s'il est inférieur alors réaliser la fourniture d'une notification à un utilisateur par l'intermédiaire du sous-système d'entrée/sortie (146) du dispositif électronique portable (118).

10. Procédé de surveillance de consommation de récipients de boisson ou de produit alimentaire comprenant :
- la déduction, au niveau d'une machine de préparation de boisson ou de produit alimentaire (4) selon les revendications 1 à 5, d'informations de consommation de récipients (150) ;
- la mise à jour, en utilisant les informations de consommation (150), d'informations d'état de stock (148), où lesdites informations d'état de stock (148) comprennent des informations détaillant une quantité de récipients au niveau d'un emplacement de la machine (4),
- l'obtention au niveau d'un dispositif électronique portable (118) externe à ladite machine (4) des informations d'état de stock (148) mises à jour ; et
- l'obtention sur le dispositif électronique portable (118) d'informations de commande de stock, qui comprennent des informations détaillant une quantité de récipients achetés par un utilisateur et ;
- la mise à jour des informations d'état de stock (148) en utilisant lesdites informations de commande de stock (152) ;
- l'affichage au niveau du dispositif électronique portable (118) de ladite quantité de stock déduite depuis les informations d'état de stock (148) mises à jour ;
**caractérisé en ce qu'il** comprend en outre :
- l'obtention, sur le dispositif électronique portable (118) d'un premier identifiant de commande de stock, qui est associé à des informations de commande de stock (152) ;
- la comparaison du premier identifiant de commande de stock à un second identifiant de commande de stock enregistré sur le dispositif électronique portable (118) ou ladite machine (4) ;
- la détermination de si lesdits identifiants sont différents, et s'ils sont différents : l'enregistrement du premier identifiant de commande de stock en tant que second identifiant de commande de stock ou en tant que second identifiant supplémentaire de commande de stock soit sur le dispositif électronique portable (118) soit sur ladite machine (4) ; et
- la mise à jour des informations d'état de stock (148) en utilisant les informations de commande de stock (152) associées au premier identifiant de commande de stock.

11. Procédé selon la revendication 10 comprenant en outre, avant l'enregistrement du premier identifiant de commande de stock en tant que second identifiant de commande de stock ou en tant que second identifiant supplémentaire de commande de stock :
- l'obtention d'une réponse d'un utilisateur provenant de ladite machine (4) ou dudit dispositif (118) confirmant que la commande de stock associée au premier identifiant doit être associée à ladite machine (4) ;
- si cela est confirmé alors ;
- l'enregistrement du premier identifiant de commande de stock en tant que second identifiant de commande de stock ou en tant que second identifiant supplémentaire de commande de stock ;
- et la mise à jour des informations d'état de stock (148) en utilisant les informations de commande de stock (152) associées au premier identifiant de commande de stock ;
- sinon uniquement l'enregistrement du premier identifiant de commande de stock en tant que second identifiant de commande de stock ou en tant que second identifiant supplémentaire de commande de stock.

12. Procédé selon l'une quelconque des revendications 10 ou 11 comprenant en outre :
- la réception d'une entrée depuis un utilisateur pour un ajustement manuel des informations d'état de stock (148) ;
- et la déduction depuis celles-ci d'informations de correction d'état de stock ;
- la mise à jour des informations d'état de stock (148) en utilisant les informations de correction d'état de stock ;
- l'affichage, desdites informations d'état de stock (148) mises à jour.

13. Procédé selon l'une quelconque des revendications 10 à 12 comprenant en outre :
- la réception d'une demande d'utilisateur pour commander une quantité de récipients ;
- la connexion du dispositif électronique portable (118) sur un réseau informatique (138) à une ressource distante (120) ;
- la commande de ladite quantité de récipients depuis la ressource distante (120) ;
- l'obtention au niveau du dispositif électronique portable (118), d'informations de commande de stock associées et/ou d'un premier identifiant de commande de stock.

14. Procédé selon l'une quelconque des revendications 10 à 13 comprenant en outre :
- la comparaison, en utilisant les informations d'état de stock (148), d'une quantité du stock réel de récipients au niveau d'un emplacement de ladite machine (4) à une valeur prédéterminée ;
- la détermination de si l'état de stock est inférieur à ladite valeur ;
- s'il est inférieur alors l'affichage d'une notification à un utilisateur.
